# EUROPEAN PATENT APPLICATION

(11) **EP 1 215 607 A2**
(43) Date of publication of application: **19.06.2002**
(21) Application number: 01310158.9
(22) Date of filing: 05.12.2001
(51) Int. Cl.: G06F 17/60

(54) **Electronic procurement system**

(30) Priority: 13.12.2000 GB 0030422
(71) Applicant: ITT MANUFACTURING ENTERPRISES, INC., Wilmington, Delaware 19801 (US)
(72) Inventor: Aram, Paul Richard, Ealing, London W13 9AS (GB)
(74) Representative: Martin, Philip John

(57) **Abstract**

The invention generally relates to systems for the acquisition, supply and management of goods and/or parts for goods. More particularly it relates to technical means for facilitating the provision of goods or parts from a manufacturer or distributor (204) to its customers (200), where the manufacturer is supplied by one or more suppliers (202).

A computer system includes a database for storing parts-related data. The database is arranged for providing a first table comprising a part identifier and a corresponding indication of a level of stock of the identified part held by a supplier, and a second table comprising the part identifier and a corresponding indication of at least one order for the identified part from a customer. The system further includes a processor (218) coupled to the database for accessing the stored parts-related data, and communication means. The system software includes a first interface application (228) for accessing the first table to make an offer to supply the identified part to the requester; an order receiving application (226) for receiving an order to supply the identified part to the requester in response to the offer, and for storing the order in the data store; and a second interface application (230) to co-operate with the communication means to provide access for the supplier to the second table.

The computer system achieves both reduced manufacturer/distributor inventory stock levels and, simultaneously, reduced part delivery times.

## Description

This invention generally relates to systems for the acquisition, supply and management of items and/or parts for items. The invention is particularly concerned with the electronic management of procurement using a communications network such as the Internet.

It is known to operate a "demand pull" parts supply arrangement in a just in time manufacturing process. In such an arrangement, a batch of parts is supplied to a production line in a so-called "kanban". The kanban is positioned on the production line where the parts are needed and a second batch of parts is provided behind the first in a second kanban. When the first kanban is empty it is returned to the supplier and the second kanban moves forward to take its place. At the same time an electronic data interchange (EDI) signal is sent to the parts supplier as notification that all the parts in the first kanban have been used. The kanbans may contain individual parts or pre-assembled sub-assemblies. Typically, the manufacturer requires that parts are delivered to the production line in a very short space of time, for example two to three hours. In a demand pull system, the manufacturer automatically orders stock from the supplier in anticipation of its use, and specifically requires the delivery of a specified quantity of parts at a specified date, time and place.

Such a demand pull system works well for large-scale, uniform manufacturing processes where there is a relatively predictable demand. However, it is not well suited to manufacturing processes which produce small batches of different types of product, among other reasons because the parts suppliers must hold large quantities of stock and because of delays caused by EDI transmission and resource planning. More fundamentally, the system provides only one-way information flow, from the manufacturer to the supplier.

In another manufacturing resource planning system (MRP), a customer ordering a part is offered immediate delivery if the part is in stock and is otherwise offered a preset lead time. In a more sophisticated system, strategic planners look at goods in stock and other orders and estimate a date by which goods or parts should be available; this date is typically governed by the component with the longest manufacturing or delivery lead time. Estimating a delivery date in this MRP system is complex and, again, requires a large inventory of stock to keep lead times low.

Where a manufacturer or distributor provides goods to a customer, it is desirable to be able to offer a short delivery time, preferably on a promised date, to satisfy the customer, whilst at the same time not needing to maintain a large stock of the goods. This would allow the supplier to operate efficiently and, as a consequence, to be able to offer lower prices. Heretofore, however, these two aims have been mutually contradictory: a large stock is needed in order to be able to respond to orders quickly, and if a small stock is held lead time increases. Other aims are, from a customer perspective, to provide a faster delivery of goods at a lower cost, and from a supplier perspective, to facilitate improved planning ahead, particularly where there is a risk of short-notice demand spikes. From a more technical perspective, there is a need to improve the information flow between the customer, supplier and manufacturer/distributor, in order to facilitate progress towards these aims.

According to a first aspect of the invention there is therefore provided a computer system for the ordering of items by a customer from an intermediary. The intermediary may be for example, a manufacturer or distributor. The items or parts for the items are supplied to the intermediary by a supplier. The computer system comprises a data store for storing data comprising an item identifier, a corresponding indication of a level of stock of the item or a part for the item held by the supplier, and an indication of at least one order for the item by a said customer. The system further comprises a programme store storing code implementable by a processor, and the processor, coupled to the data store for accessing the stored data and to the programme store for implementing code in the programme store. The code comprises code for a customer interface to the data store, which is accessible by the customer, and a supplier interface to the data store, which is accessible by the supplier. The customer interface operates to receive a request for an item from the customer, to output offer data for making an offer to supply the requested item to the customer based upon the stock level of the item or a part for the item, held by the supplier, and to receive from the customer and store in the data store order data for the requested item. The supplier interface operates to receive from the supplier and store in the data store an indication of the level of stock of an item or a part for the item, and to output customer order data for the item to the supplier.

This arrangement provides a two-way information flow in which a supplier sees order information and in which a manufacturer or distributor has access to information relating to the supplier's stock. The data may be arranged conventionally, with fields and records, and the data store is typically organised as a relational database having two or more ports or windows, one for the distributor (and/or for the customer) and the second for the supplier. This provides the distributor with access to information from the supplier regarding the supplier's stock, and the supplier with access to information from the distributor relating to customer orders from the distributor. This symmetrical database access and two-way data flow provides significant benefits, as outlined below.

For convenience, reference will be made to a system for the distribution of items or, equivalently goods or parts, but the described arrangements are equally applicable to the manufacture of the items, goods, products, parts, sub-assemblies and the like. Likewise, a customer may be a paying or non-paying, internal or external customer of the manufacturer, distributor or supplier.

In an embodiment, the data store stores a list of supplier's inventory by location, accessible via an item or part identifier, normally an item number. This is visible to the intermediary, so that the intermediary can promise items to a customer based, at least in part, upon the supplier's stock rather than solely upon the distributor's stock. The data store may also comprise a "demand schedule" listing a series of orders and corresponding due dates which have been accepted by the distributor. Thus, a supplier is able to see what items have been promised to customers by what dates and can thus schedule their item or item parts provision to the distributor accordingly. Normally the scheduling is arranged to provide a minimum stock at the distributor, with a safety level of stock being held at the supplier.

The manufacturer or distributor is effectively able to operate an improved "just in time" manufacturing or distribution system in which items for onwards shipment to a customer or parts for the items, remain for a minimal time in the physical possession of the manufacturer/distributor.

The manufacturer or distributor also benefits through the ability to significantly reduce the level of inventory it holds, for example to less than 5%, or even to less than 3% of sales. Moreover, this inventory reduction is not at the expense of increased lead time and the system in fact permits significantly shorter lead times for component delivery.

The arrangement also benefits the supplier because the supplier need no longer be taken by surprise by a large order, since the supplier can be provided with customer order information at the same time as an order is confirmed. Thus, the supplier can schedule their item or part acquisition and manufacturing processes to optimally meet the known customer demand.

Finally, the customer benefits because the efficiency of the supply chain reduces overheads, allowing lower prices to be offered to the customer, as well as shortened delivery times. A further benefit is that, as described in more detail below, the distributor or manufacturer is able to make, and keep, a precise promise as to exactly what items are to be delivered on what date and, if necessary, at what time. The technical configuration of the database also permits a number of supply chain related activities to be streamlined and simplified including, for example, the provision of a capability for on-line self-invoicing.

Preferably, the data store includes an indication of a level of stock of the item, or of the item and a part for the item held by the intermediary. In this way, the intermediary can promise items to the customer on the basis of stock it has in hand as well as stock at the supplier.

It is also preferable that the data store is configured for indicating a due date or time together with an expected stock level, to take account of work-in-progress (WIP) at the supplier. Thus, data store may indicate that a particular lot or batch of items or parts will be available for promising to a customer by the date at which their manufacture is expected to be complete. It is then preferable that an offer made to a customer takes account of such work-in-progress as this again helps to optimise the supply chain and reduce both the level of stock and the time for which it is held.

Preferably, the data store is further configured for indicating a due date or time when a lot or batch of items or parts is expected to arrive at the intermediary. This allows the transit time between the supplier and intermediary to likewise be taken into account when making an offer to supply items to a customer.

It is further preferable that an offer made to a customer should take account of any offers previously made and items or parts for items allocated against these orders.

The offer data may comprise a date and/or time to indicate to the customer by when the request can be met. This allows a customer to request items from the intermediary, the computer system then calculating when the requested items can be delivered. The customer can then decide whether or not the delivery date meets their requirements.

In a preferred embodiment, the customer interface further comprises means to receive a data and/or time the customer indicating by when the item is desired, and means to determine whether or not the request can be met and to let the customer know the outcome. This allows the provision of an "available-to-promise" (ATP) customer order system.
In such systems, the determination of whether or not the customer request can be met can be made based upon the knowledge of the supplier's stock and work-in-progress. This allows the intermediary to promise delivery to the customer earlier than would otherwise be possible since the intermediary, (or at least the computer system) can determine what stock will be available for promising to the customer, and when.

Unlike the "kanban" system, there is no requirement for supply triggers (although, in practice, these may be provided) and some of the onus for on time delivery is moved from the distributor to its supplier or suppliers. Theoretically, the distributor need hold no stock although in practice some stock will be held because, for example, of time taken to log incoming stock into the distributor's warehouse, and because of exceptions such as returned goods, unpaid bills and the like.

The ATP system can calculate a date on which the items can be guaranteed to be available to the customer. This calculation can be carried out without any need for manual intervention such as is necessary in the known MRP system mentioned in the introduction. If the calculated date is on or before the customer's desired date, the system can promise to meet the customer's needs; if the calculated date is later than the desired date, the system can offer the items on the later date and the customer may then choose whether or not to accept the offer. If the offer is accepted, the order is logged into the database and is available for the supplier to see. The system may also send a notification, for example by e-mail, to the supplier to alert the supplier to the newly logged order.

In a preferred embodiment the ATP system determines whether and/or when the customer request can be met by examining first the stock level of items or parts for the items held by the intermediary, and then the level of stock held by the supplier. If the stock is still insufficient, the system then looks at the supplier's work in progress.

If the date cannot be met, the computer system may split the customer request into a part which can be met by the desired date and the part which is to be supplied by a later promised date. Additionally or alternatively, the customer may be offered substitute items available at an earlier date or time. Since a customer will normally require delivery of the ordered items on a specified date and no earlier, the system may also re-allocate items allocated to earlier orders to optimise the response to a given customer request for items to be delivered on a desired date.

In an embodiment where the intermediary is a manufacturer and the supplier supplies parts of items, the data store stores an indication of the level of stock of parts of the item held by the supplier. The supplier interface is then implemented to receive and store in the data store an indication of the level of stock of parts of an item held by the supplier.

The customer interface may then be implemented to output offer data for making an offer in dependence upon the time to manufacture an item using a supplied part.

In a preferred embodiment, the computer system also includes stock loading code or a stock loading application for a supplier to enter their stock inventory data. The data store into which the inventory data is loaded may informally be termed a "supplier's warehouse". Similarly, the data store for distributor's inventory data may be termed a (virtual) "distributor's warehouse". Preferably, each new batch of items or parts loaded onto the system is given an identifying number, referred to as a lot number.

It is further preferred that the system includes a stock transfer application for moving lots of stock between locations in the supplier's warehouse and also for logging the movement of stock out of the supplier's warehouse into some other location such as into an in-transit location and/or into a distributor or customer location.

The system preferably also includes an invoicing application to allow a supplier to invoice the distributor for items or parts received. In such a system, once the first system user or manufacturer/distributor has confirmed that a lot or batch of items has been received, for example, by updating the batch or lot location, the invoicing application allows the second system user or supplier to transmit an invoice request to the computer system, for checking and validation, before confirmation of the invoice to the supplier.

The above embodiments have been discussed with reference to a single supplier, but in practice there will normally be a plurality of such suppliers. It is therefore preferable to restrict access to the computer system using an access control system, to allow each supplier to log separately onto the system, for example, using a password and user identification means, such as, a digital certificate. It is then convenient to manage access to the database by providing each supplier with a unique set of item or part numbers associated with items or parts that that supplier only provides to the manufacturer/distributor/customer. In some cases, however, it may be desirable to allow two or more suppliers to share some item or part numbers.

The computer system may communicate with the intermediary and/or customer and/or supplier(s) by any convenient communication means, but the system is particularly suited to implementation over an electronic communications network employing an internet protocol, such as an intranet or extranet communications network or the Internet or World Wide Web. In this case, the software applications may comprise or consist of instruction codes for web data pages, such as HTML (Hyper Text Markup Language) code, XML (Extensible Markup Language) code, and/or Java, ActiveX (trademark) or Perl code or scripts in other programming languages.

In another aspect, the invention provides a corresponding method for facilitating customer ordering of items from an intermediary such as a manufacturer or distributor. The method uses the data store described above. An indication of a level of stock of an item or of a part for an item is received from the supplier and stored in the data store. A request for the item is then received from the customer and offer data is output for making an offer to supply the requested item to the customer based upon the level of stock of the item or a part for the item. Order data for the requested item is then received from the customer and stored in the data store, and this data is also output to the supplier. Thus information from the supplier is used for making an offer to supply an item to the customer and access to a resulting stored order is provided for the supplier. Broadly speaking, the method provides corresponding benefits to those described above.

In another aspect, the invention provides a supply system terminal for notifying a supplier of items or parts of items of demand for the items or parts. The terminal comprises stock level input means for the inputting a stock level comprising an item or part identifier and corresponding indication of a level of stock of the identified item or part held by the supplier. The terminal also comprises stock level transmitting means for transmitting the item or part identifier and corresponding stock level indication to a remote system, demand schedule receiving means for receiving from the remote system a demand schedule comprising an item or part identifier and a corresponding indication of at least one demand for the identified item or part, and demand schedule outputting means for outputting the received demand schedule to the supplier.

The stock level input means, stock level transmitting means, demand schedule receiving means and demand schedule outputting means may all be software such as program code and/or instruction code for internet/web data pages in HTML, XML, Java or similar. Generally speaking, they will each comprise coded instructions for a computer and may be separate applications or parts of a single program. The supplier may manufacture or buy in the supplied items or parts. The items or parts may be individual components, sub-assemblies, or completed goods or products in themselves. The terminal is suitable for operation with the above described computer system for the acquisition of items or parts thereof.

The supply system terminal provides supplier visibility of a demand schedule comprising at least one order for demand for supply of the identified item or part, thus allowing the supplier to plan ahead. In an embodiment of the terminal, the item or part is supplied to a remote intermediary user of the supply system, such as a manufacturer or distributor, in response to an order for the item(s) or part(s) placed with the intermediary user by a customer.

Advantageously the demand schedule includes an indication of the level of stock of the item or part held by the intermediary user, so that the supplier can take this into account when planning to meet the customer demand. Preferably, an order on the demand schedule includes a request for a specified number of items or parts and a corresponding due date/time by when these should be available. It is also preferable that the demand schedule has provision for including a forecast number of items or parts required and the corresponding due date, so that an order which it is known will be made, but which has not been logged onto the remote system, can be notified to a supplier. Preferably, the demand schedule also includes entries indicating an available number of the identified item or part at a corresponding date.

Normally, the demand schedule will comprise a plurality of orders which can be sorted by due date and, if desired, bucketed or binned into groups of orders having a range of due dates. Preferably, the demand schedule further comprises information indicating a safety level of stock held by the supplier, an actual total level of stock held by the supplier, a level of stock in transit between the supplier and an intermediary user, of the supply system such as a distributor, a total number of the identified items or parts requested from the intermediary user of the supply system, and/or a number of items or parts requested from the supplier to the intermediary user, for example, by means of a purchase order from the intermediary user.

In an embodiment, the demand schedule comprises a list of orders each indicating a number of items or parts required and a due date, this order information being dependent upon the stock level indication transmitted from the supplier to the remote system. Thus, in a similar way to that described above, the demand schedule is based upon orders received in response to promises to supply customers based upon supplier stock level information entered into the terminal. This supplier stock level information may comprise, for an identified item or part, a batch or lot number, an associated number of available items or parts, and, optionally, a location which, as described above, may include a work in progress location together with an associated item or part available date.

Preferably, the terminal also includes stock level input means and stock transfer means as described above, together with a self-invoicing application. Again, the supply system terminal is particularly suited to use with a communications network such as an internet, intranet, or extranet. Thus, the terminal may comprise a general purpose computer when programmed with an appropriate set or sets of coded instructions.

According to another aspect of the invention, there is provided a method of operating a supply system terminal as described above. Broadly speaking, the method comprises entering a stock level for an identified item or part held by a supplier, transmitting this to a remote system, receiving a demand schedule for the item or part from the remote system, the demand schedule including at least one order for the item or part, and outputting this demand schedule to the supplier. Again, this method may be embodied in suitable computer program code.

According to a further aspect of the invention, there is provided an ordering terminal for a customer to order items from a manufacturer or distributor. The terminal comprises item request inputting means for inputting a request for an item and a date by which the item is desired, request transmitting means for transmitting the request to a remote computer system, offer receiving means for receiving from the manufacturer/distributor offer data comprising a determination of whether or not the item can be supplied by the desired date, and outputting means for outputting the offer data to the customer. As described above, the means for performing these functions may comprise coded instructions for a computer, such as software applications.

The offer receiving means receives available-to-promise data as described above in connection with the computer system for the acquisition of items or parts from an intermediary. In response to a customer request, the terminal is able (in conjunction with the remote system) to determine whether a desired delivery date can be met and/or offer a date by when the order can be met. If the order cannot be met by the due date the system may offer an earliest date by when delivery can be made. The terminal may also offer substitute items when the desired date cannot be met.

In an embodiment of the ordering terminal, the terminal further comprises means to transmit acceptance of the offer to the manufacturer or distributor and means to receive back confirmation of acceptance of the order.

In a preferred embodiment, the ordering terminal comprises means to select one of a set of projects available for ordering against at the manufacturer/distributor. The terminal may then restrict the ordering of items to only those items associated with the selected project. This reduces the possibility of items being ordered in error. For similar reasons, and to prevent abuse of the system, the terminal also preferably includes customer access control means, such as a customer ID and password, to control access to the remote computer system.

In another aspect, the invention provides a corresponding method of ordering items from a manufacturer and/or distributor using an ordering terminal. The method comprises receiving a request for an item and a date by which the item is desired, transmitting the request to a remote computer system, receiving from the manufacturer/distributor offer data comprising a determination of whether or not the item can be supplied by the desired date, and outputting the offer data to a customer.

Where a plurality of the requested item, or a plurality of different items, is ordered the method may further comprise indicating to the customer which parts of the order can be met by the intermediary by which dates. Alternatively, the customer request need not to specify a date by which an item is desired and, instead, the offer data may simply specify a date or dates by when the request can be met. Such an available-to-promise (ATP) date or dates may be supplied whether or not a desired date is specified.

These methods provide similar advantages to those described above for the ordering terminal and, again, the methods can be embodied in computer program codes.

The invention also contemplates a supply management terminal for a manufacturer and/or distributor. The terminal comprises item receipt code for receiving supplier, item identifier and received quantity information and for transmitting this information to a management server; order receiving code for receiving an order identifier for matching to a supplier's order; and management system updating code to update management system computer records with items received and supplier order information. The code may comprise separate applications or a single program.

Such a terminal allows the manufacturer/distributor to book in items or parts thereof received from the supplier and to match the items received to a purchase order. The supply management terminal is suitable for use with the above described computer system for item ordering.

In a simple embodiment, the above described computer system may operate without a separate terminal for the intermediary, as core elements of the information in the computer system data store may be obtained from the customer and supplier independently of the intermediary. However, it is preferable that the intermediary has a window onto the system, for example, to control and manage the system and to manipulate data in the data store to book in items received, and to manage other aspects of the system such as unpaid invoices, item return, and quarantined, potentially-faulty items.

In a further aspect, the invention provides a procurement system terminal for informing a supplier of requests for supply of items. The terminal comprises supplier stock data entry means for entering data relating to a level of supplier stock of items supplied by the supplier; supplier stock data transmission means to transmit the supplier stock data to a remote system; request schedule reception means for receiving an item request schedule from the remote system; and request schedule outputting means for outputting the received request schedule to the supplier; and wherein the request schedule comprises at least one request for items which have been promised for supply based upon said level of supplier stock.

The request schedule data is dependent upon the supplier's stock data, providing a feedback loop wherein the request schedule may contain only requests that can be met, and requests that can only be met when the supplier's stock is taken into account.

In another aspect, the invention provides a management system terminal for informing a goods supplier of requests for goods. The terminal comprises goods request schedule receiving means for receiving a request schedule from a remote system user having requests for goods from customers of the remote system user; and request schedule outputting means for outputting the received request schedule to the supplier. With this management system terminal, since the supplier sees a request schedule of orders placed by customers of the distributor, the supplier is better able to plan and schedule the supply of goods.

According to another aspect of the invention there is provided a procurement system terminal for user self-invoicing. The terminal comprises invoice data reception means for receiving, from a remote computer system, validated data comprising at least one order identifier identifying an order for goods validated as having been received by an order recipient; outputting means for outputting the received invoice data to the user; self-invoicing request means for receiving from the user a self-invoicing request; and invoice request transmission means for transmitting the self-invoicing request to the remote system.

Typically, the goods receipt is validated by the distributor as having been received, before self-invoicing is permitted. The procurement system terminal may be used with the computer system described above to access the data in the data store, for example by means of records of a purchase order number, a goods received date, a goods identifier, a goods quantity, an order value and/or an order currency. In this way, human intervention in the invoicing process can be reduced to a minimum.

In a further aspect, the invention provides a procurement system server for a distributor and/or manufacturer who receives parts, or goods comprising parts, from a supplier, for sale to a customer of the distributor/manufacturer. The server comprises a database of the suppliers' stock and an order system, for receiving a parts or goods request from the customer and for determining, using the database, whether or not the customer request can be met.

By using the database of supplier's stock, it is possible to promise delivery of goods to a customer based upon this stock. This provides the benefits described above of a reduction in both distributor/manufacturer inventory and goods/parts lead times, by allowing the order system to promise a delivery date to a customer dependent upon stock levels of the part to be delivered held at or by the supplier. The order system and database will normally be implemented using appropriate computer software running on a general purpose computer. In use, any conventional communication system may be employed for communicating between the customer, supplier, and/or distributor and the procurement system server. Thus, for example, telephone, fax, e-mail or computer network communications could be used.

In a further aspect, the invention provides a computer system for facilitating supply of goods, or parts for goods, from a supplier to a manufacturer/distributor who takes orders for the goods or parts from a customer, the computer system comprising: a database comprising a demand schedule, the demand schedule including a part identifier, one or more customer orders for the part and corresponding dates indicating by when the orders have been promised to be met by the distributor/manufacturer; communication means coupled to the database; and a supplier interface application to provide supplier access to the demand schedule.

In a yet further aspect, the invention provides a system for supplying goods or parts from a supplier to a manufacturer and/or distributor, and from the manufacturer/distributor onwards to a customer, the system comprising: means to receive from the supplier an indication of the level of stock of an identified part held by the supplier; means to receive from the customer a request for the identified part and a date by which the customer desires the part; means to determine, based upon the supplier's stock, or whether the customer request can be met; means to communicate with the customer to transmit to the customer an indication that the request can be met and to receive confirmation of an order for the identified part from the customer; and means to transmit to the supplier an indication of the confirmed order.

In a still further aspect, the invention provides a method of managing the acquisition of items from an intermediary by a customer, the items being supplied to the intermediary by a supplier, the method comprising: storing item-related data, the data being arranged for providing: a first table comprising an item identifier and a corresponding indication of the level of stock of the identified item held by the supplier; and a second table comprising the item identifier and the corresponding indication of at least one order for the identified item by a said customer; accessing the first table for making an offer to supply the identified items to the customer; receiving an order to supply the identified item to the customer in response to the offer; updating the second table using the received order; and providing access for the suppler to the second table. Any conventional communication system, such as telephone, fax or e-mail may be employed in accessing the tables and for other communications used in this method.

In a first additional aspect there is provided a stock planning tool to graphically display predicted stock level changes over a period of time, the stock planning tool comprising: computation means to calculate a predicted stock level at a future time by adding an initial stock level to a predicted cumulative additional stock level at the future time and subtracting a cumulative stock demand at the future time; and graphing means, in communication with said computation means, for providing a graphical output of variations of said predicted stock level over time.

The stock planning tool, in a preferred embodiment, comprises a computer program on a storage medium and/or a suitably programmed computer. In this embodiment, the graphing means may comprise software code for representing data graphically on a computer monitor, for example, as a bar or line graph. The future time at which the predicted stock level is calculated may comprise a date or a date and time.

According to a second additional aspect of the invention there is provided a data processing system comprising: a stock level data store for storing stock level data for a stock item or part comprising current stock level data, stock demand data and stock replenishment data; a program store storing code for a processor; and a processor, coupled to the data store for accessing the stored data and coupled to the program store for implementing the stored program code; the code comprising code for: calculating predicted stock level data using the current stock level data, the stock replenishment data and the stock demand data, said predicted stock level data comprising a date and/or time and a predicted number of stock units available for meeting a demand for the stock item or part at said date and/or time; and graphically displaying changes in the predicted stock level data over a future period of time.

In one embodiment the stock replenishment data comprises work-in-progress data for a stocked item indicating, for one or more batches of work-in-progress, a quantity of items being manufactured (or purchased) and an expected date at which the work-in-progress should be complete so that the items are available for use. Preferably the predicted stock level sums the cumulative work-in-progress up to the future time, but preferably excludes work-in-progress which is, or is predicted to be overdue. Preferably the stock demand data comprises order data for a stocked item, and in one embodiment comprises a cumulative sum of numbers of the item which have been promised to customers, in response to customer orders, by the future time.

In a further additional aspect of the invention there is provided an item or part supply planning method for assisting identification of a potential date and/or time at which there is a risk of a level of stock of the item or part falling below a threshold value, the method comprising: reading initial stock level data from a data store, the initial stock level data comprising data indicating an initial stock quantity of the item or part; reading customer demand data from a data store, the customer demand data comprising data indicating at least one order for a demanded quantity of the item or part and a corresponding date and/or time for meeting the order; reading stock replenishment data from a data store, the stock replenishment data comprising data indicating at least one stock replenishment event increasing a stocked quantity of the item or part at a corresponding date and/or time; calculating a cumulative item or part demand at a future data and/or time by summing demanded quantities data of the item or part preceding said future date/time; calculating a cumulative stock level at a future data and/or time by summing said initial stock quantity and increases in stocked quantity of said item or part preceding said future date and/or time; calculating a predicted level of stock by subtracting said cumulative item or part demand from said cumulative stock level; repeating said predicted level of stock calculation for a plurality of different future dates and/or times; and graphically displaying a plurality of predicted levels of stock for a corresponding plurality of different future dates and/or times.

The "reading" steps may be performed in any order, and the order of the first two "calculating" steps may be reversed. The initial stock level, demand and replenishment data may, in alternative embodiments, be input by a user rather than read from a data store.

Aspects of the invention are particularly suited to implementation over a communications network such as the Internet, an intranet or extranet. Thus, in preferred embodiments, the invention is implemented on general purpose computer systems implementing appropriate software. The present invention can be embodied in computer program code, and as is well known to those skilled in the art, the code may be implemented at a client computer or a server computer as desired. Computer programs may be provided to the computers by any conventional carrier medium such as tape, disk, programmed memory or other storage mediums or, alternatively, a program may be provided via a communications network, as an electrical signal.

The above and other aspects of the present invention will now be further described, by way of example only, with reference to the accompanying figures in which:
Figure 1 shows a schematic diagram of a generalised embodiment of the present invention;
Figure 2 shows a schematic diagram of a specific embodiment of the present invention;
Figure 3 shows a schematic diagram of components in a customer's or supplier's computer;
Figure 4 shows a schematic representation of a database for use with the system of Figure 2;
Figures 5a to 5f show tables of supplier accessible data for the system of Figure 2;
Figure 6 shows a table of distributor accessible data for the system of Figure 2;
Figures 7a to 7c show tables of customer data for the system of Figure 2;
Figure 8 shows an exemplary menu structure for a supplier's computer;
Figure 9 shows a flow diagram of an access procedure for a supplier's computer;
Figures 10a and 10b show a flow diagram illustrating a stock load procedure for a supplier's computer;
Figures 11a and 11b show a stock transfer procedure for a supplier's computer;
Figure 12 shows an exemplary inventory output of a supplier's computer;
Figures 13a and b show, respectively, an exemplary demand schedule web page output of a supplier's computer; and an example of a demand graph web page;
Figure 14 shows a flow diagram of a self-invoicing and accounting procedure for a supplier's computer;
Figure 15 shows an exemplary menu structure of a distributor's computer;
Figure 16 shows a flow diagram for a stock receipt procedure for a distributor's computer;
Figure 17 shows an exemplary menu structure of a customer's computer;
Figures 18a and 18b show a flow diagram for an order entry procedure for a customer's computer;
Figure 19 shows an exemplary order description web page output of a customer's computer;
Figure 20 shows an exemplary order acknowledgement web page output of a customer's computer;
Figures 21a and b show, respectively, an exemplary order list web page of a customer's computer; and an example of an order detail web page output of a customer's computer;
Figure 22 shows an example of an ATP information web page for a customer's computer; and
Figure 23 shows a flow diagram of a procedure for displaying an ATP information web page.

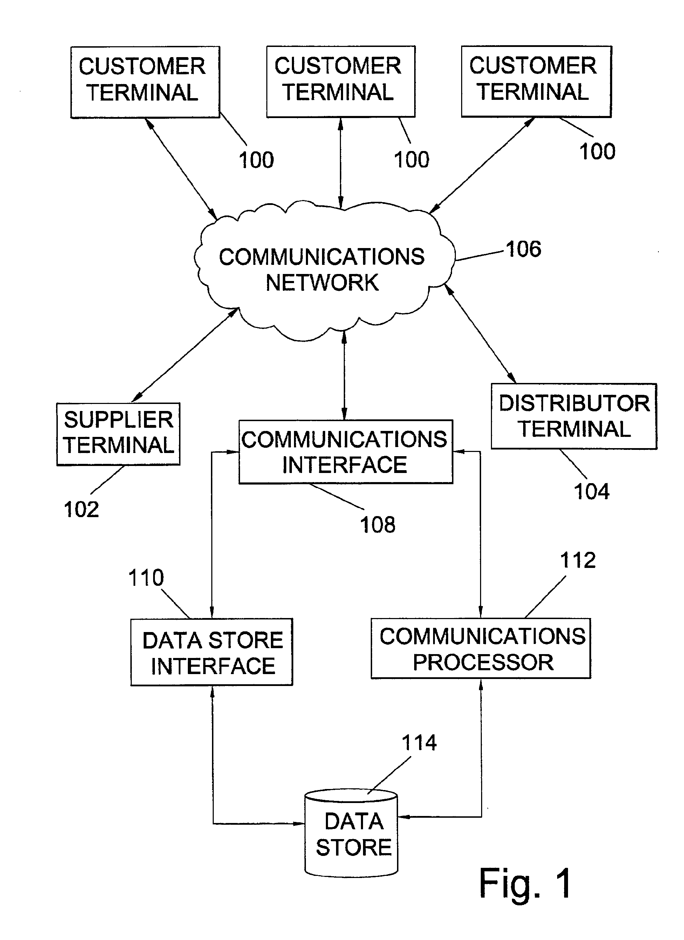

Referring first to Figure 1, this shows a generalised embodiment of the present invention. In Figure 1, a communications network 106 is provided to which are coupled customer terminals 100, supplier terminal 102 and distributor terminal 104. Also, coupled to communications network 106 is communications interface 108 which interfaces to data store interface 110 and communications processor 112, both of which have access to data store 114. Thus, data in the data store is accessible via a customer terminal 100, a supplier terminal 102 and a distributor terminal 104. Communications processor 112 is for manually or automatically generating electronic notifications for sending over communications network 106; this is not an essential feature of the system. The communications interface 108, data store interface 110, communications processor 112 and data store 114 may all be provided within a single general purpose computer, or these functions may be split between separate computers in a manner well known to those skilled in the art.

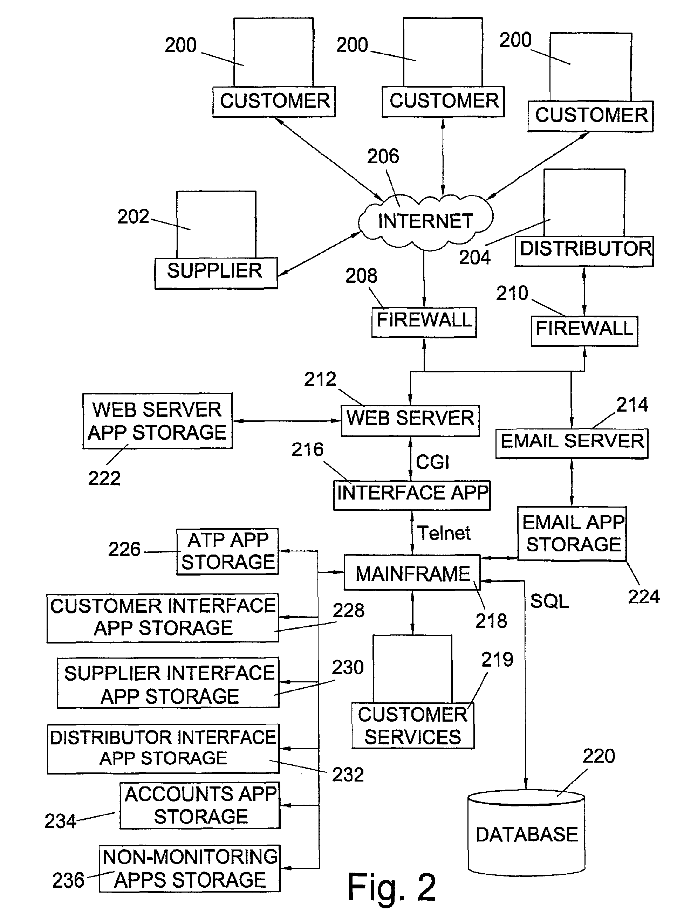

Figure 2 shows a more detailed schematic diagram of a specific embodiment of the invention. In this embodiment, customer terminals 200, supplier terminal 202 and distributor terminal 204 are interconnected by means of internet 206. The distributor terminal 204 accesses the internet via firewalls 208 and 210 which provide additional security. Firewall 208 also couples web server 212 and e-mail server 214 to internet 206. Web server 212 is coupled by means of interface application 216 to mainframe computer system 218, which is linked to database 220. Mainframe 218 interfaces with database 220 using SQL (Structured Query Language). A customer services terminal 219 is coupled directly to mainframe 218 for use by the distributor's customer services department. Terminal 219 allows the customer services department to run applications in code storage areas 226-236 (described below) and to add to, change and/or delete data stored in database 220.

Web server 212 is an HTTP (Hyper Text Transfer Protocol) server and interfaces to interface application 216 using a Common Gateway Interface (CGI), for example, by executing a CGI script. Interface application 216 interfaces to mainframe 218 by means of a telnet protocol running under TCP/IP (Transmission Control Protocol/Internet Protocol). Interface application 216 may comprise a so-called "screen scraper" application providing a simple, character-based interface to applications 228 to 234 for web server 212.

Web server 212 is coupled to storage for a web server application 222. This allows web server 212 to generate web pages for downloading by customer 200, supplier 202 and distributor 204 terminals for interpretation by browsers implemented thereon. Web server 212 generates web pages using HTML (Hyper Text Markup Language) and Java code stored in web server application storage 222, to provide an interface to data received from database 220 and mainframe 218 via interface application 216.

E-mail server 214 can send and receive e-mails to and from customer terminals 200, supplier terminal 202 and distributor terminal 204 using e-mail application code in storage 224. In a preferred embodiment e-mail server 214 receives e-mail data from programs running on mainframe 218 in real time but dispatches e-mails to their recipients in batches, for example at the start or end of a working day. This helps the recipients manage the e-mails they receive. Some e-mails, for example those originating from a customer service department of the distributor and/or e-mails notifying a supplier a change in demand for a supplied part, may however be sent out in real time, without waiting for the next batch job to be processed.

Mainframe 218 may be an IBM mainframe, and in one embodiment is an LS400 system. Mainframe 218 has storage 228 for a customer interface application for providing a customer terminal 200 with an interface to data on database 220; storage 230 for a supplier interface application for interfacing supplier terminal 202 with database 220; storage 232 for a distributor interface application for interfacing a distributor terminal 204 with database 220; and storage 226 for an available-to-promise (ATP) application. The mainframe 218 also has storage 234 for an accounts application for providing an accounts interface between supplier terminal 202 and database 220 and, optionally, for providing further accounts interfaces for customer terminals 200 and distributor terminal 204. Broadly speaking, there is a separate program for each menu option on a supplier's/distributor's/customer's main menu web page, as further described later.

Mainframe 218 is further coupled to storage 236 storing code for one or more monitoring applications to monitor data in the database 220 at intervals and to generate data for e-mail notifications of exceptional conditions for e-mail server 214. In particular the code monitors for immediate and predicted future changes in stock level to worn for example, when stock of a part is at risk of running out, as described in more detail below. The code also performs other housekeeping functions such as erasing dummy orders raised by ATP code (again described later) after a predetermined time interval.

The applications on the mainframe may be written in any conventional computer language, and in one embodiment are written in COBOL. Although only a single supplier terminal 202 and a single distributor terminal 204 are shown in Figure 2, in general there will be several such terminals, including at least one terminal for each supplier wishing to use the system. Similarly, the customer, supplier, distributor, and accounts applications will generally comprise a number of software components. These applications are described in more detail below.

The available-to-promise (ATP) application provides a number of order entry functions and in particular calculates whether or not a given customer request for parts can be met. The ATP application interacts with customer and supplier applications 228 and 230 on mainframe 218 to provide information to customer terminals 200. The ATP application is described in more detail below.

As is well known to those skilled in the art, the above described applications and servers may be implemented on separate, dedicated machines or they may comprise separate programs running on a single machine. Likewise, the connections between elements illustrated in Figure 2 may serve to illustrate logical or physical connections.

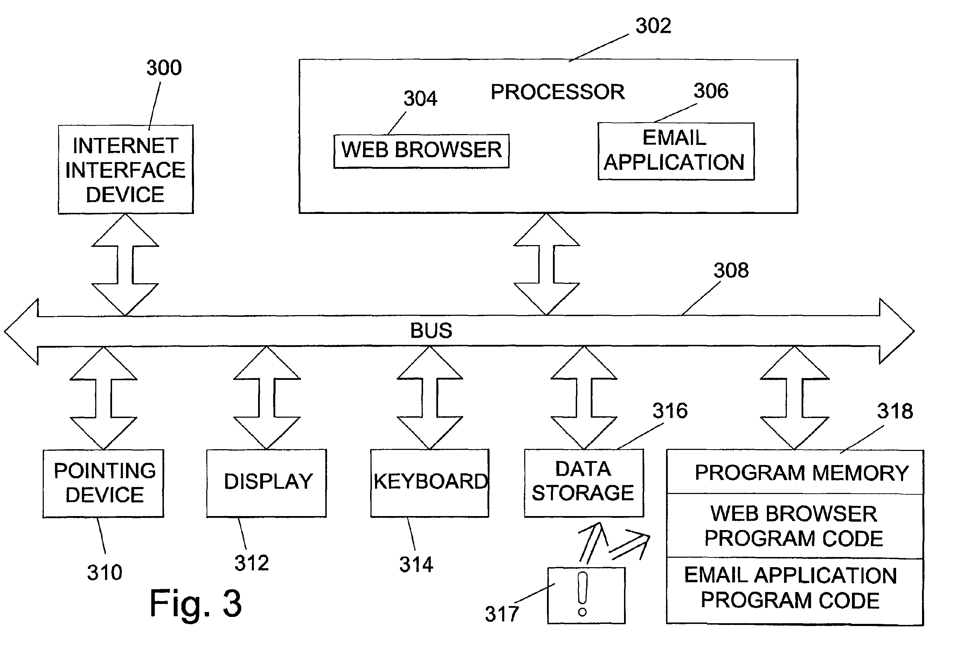

Figure 3 shows a general purpose computer system suitable for use as a customer terminal 200, supplier terminal 202 or distributor terminal 204. The computer includes an internet interface device 300 such as a modem or local area network interface (for indirect internet access). A processor 302 loads and implements code from programme memory 318 for a web browser 304 such as Microsoft Internet Explorer (trademark) and for e-mail application 306 for sending and receiving e-mails. Data storage 316 provides local data storage for the terminal and may comprise, for example, RAM or non-volatile storage such as a hard disk. Data in data store 316 and/or program store 318 may be written to and/or read from portable storage media, such as floppy disk 317. Pointing device 310, such as a mouse, display 312 and keyboard 314 provide an interface for the user. The components of a computer are linked by means of bus 308.

Normally, customer terminals 200, supplier terminal 202 and distributor terminal 204 will comprise a general purpose personal computer running the web browser and e-mail software. In use, web pages are downloaded from web server 212 by means of internet access device 300, for output on display 312, and user inputs received by means of pointing device 310 and keyboard 314 are transmitted back to the web server 212 again by interface device 300.

In order to better understand further features of the system, operation of an embodiment of the invention will now be described in outline.

In an embodiment, web server 212, e-mail server 214, mainframe 218 and database 220 are maintained and operated by a parts distributor. The distributor receives parts from a plurality of suppliers and supplies them to customers to meet customer orders. The distributor may also manufacture parts to meet customer orders. Parts are identified by number and in one embodiment, each supplier has a set of parts that they have the exclusive right to manufacture for the distributor.

Each supplier has what may be termed a virtual system warehouse. This is a part of database 220 into which each supplier loads inventory information for the parts they manufacture. For each part, this information includes a lot number, assigned to each batch of parts, a quantity (of parts) and a location identifying where the parts are physically held. At this stage, the parts are still owned by the supplier. Normally, the supplier is required to maintain a minimum "safety stock" level for each part. For parts owned by a distributor, the locations may include locations at both the supplier and the distributor.

Unless previously committed to other orders, stock in all these locations is considered to be available for allocating to a customer order. For administrative reasons, to allow goods to be booked in and paid for by the distributor, parts are manufactured, stocked and supplied under a blanket purchase order from the distributor. This purchase order, however, plays no part in the day to day scheduling of parts supply and demand and such a purchase order will normally be for a relatively large quantity of parts to be provided at a relatively late future date, beyond the so-called ATP horizon explained below.

The detailed scheduling of parts supply and demand is managed using the ATP (available-to-promise) system. Initially, a customer logs onto web server 212 to place an order for a consignment of parts to be delivered on or by a specified date. Before the distributor commits to meeting the customer request, ATP application 226 accesses database 220 to determine the level of stock held by the relevant supplier (whether at the supplier or elsewhere) which is available for promising. The ATP system is then able to make a decision on whether or not the customer request can be met, and is further able to promise a date by when the requested parts will be available. The promised parts may then be identified as allocated or reserved so that customers requests may be fairly met on a first-come, first-served basis.

It will always be possible to supply the parts by a manufacturing or replenishment of stock lead time and this time is referred to as the ATP fence. The ATP horizon may be calculated by adding a predetermined number of days to the ATP fence or it may be set at some distant time in the future, for example, one year from the associated purchase order.

As well as locations at a supplier and the distributor, other types of location are also provided. A work-in-progress (WIP) location is provided together with a due date so that work-in-progress is available for promising to a customer based upon the due date for completion of manufacture of the relevant lot of parts. A stock-in-transit location is provided for each lot that is in transit. An associated in-transit date specifies the date on which the parts went into transit, and an ATP date can be calculated based upon this, by looking up a transit (delivery) time for the parts between the relevant locations in a table or record in database 220. Generally speaking, the system allows for a transit time for all stock held at a supplier, and for work-in-progress at the supplier, when determining an ATP date for the parts. Other locations which are provided for lots include "quarantine" locations (for faulty or possibly faulty parts) and "reserved" stocking locations, neither of which normally contribute to ATP determinations.

Once orders based upon the ATP information have been logged into database 220, they are immediately visible to a supplier via terminal 202. Usually an immediate e-mail notification is also sent to the supplier concerned to warn of the new order for a part, so that the supplier can immediately take any necessary action and so that the supplier is always in possession of demand data which is as up to date of that of the distributor itself.

Demand data for new and existing orders is available to the supplier on a demand schedule web page provided by web server 212. A demand schedule for a given part lists customer orders for the part, for each order providing a due date and quantity required. For convenience, the orders may be grouped or binned so that, for example, the demand for a part may be presented as a quantity required during a given period, such as five working days. The demand schedule also shows any free stock owned and held by the distributor. This information, together with the agreed safety stock level, allows a supplier to formulate a production plan to meet the promised orders as set out in the demand schedule. The onus is placed on the supplier to automatically ship parts to the distributor to meet the customer demand for parts that supplier is responsible for. Provision of an in-transit location allows lots of parts to be tracked so that, for example, these are not sold twice.

It will be apparent to the skilled person that although use of the system has been described in relation to the supply of parts, in this context "parts" encompasses goods and products of all descriptions including, but not limited to, assemblies and sub-assemblies of components.

The technical structure and features of the system provide a number of advantages. A supplier can immediately see actual demand for a part, in real time, rather than a delayed summary of demand for a part such as would normally be provided by a distributor's purchase order. The system also allows the automatic delivery of stock to the distributor to meet the required date promised to the customer, and lead times can be reduced to transit times only. The system also removes the need to manually track and manage customer delivery dates and provides a further capability for automatic data processing facilitating, for example, self-invoicing as described below. Furthermore, customers can be promised goods based upon stock and work-in-progress at the supplier, by taking account of the supplier-to-distributor transit time and the expected date of completion of the work-in-progress. This should allow customer lead times to be reduced by a factor of two or three and the level of inventory held by the distributor, as a percentage of sales, to be approximately halved.

Having reviewed the operation of the system, other aspects of a preferred embodiment will now be described in more detail.

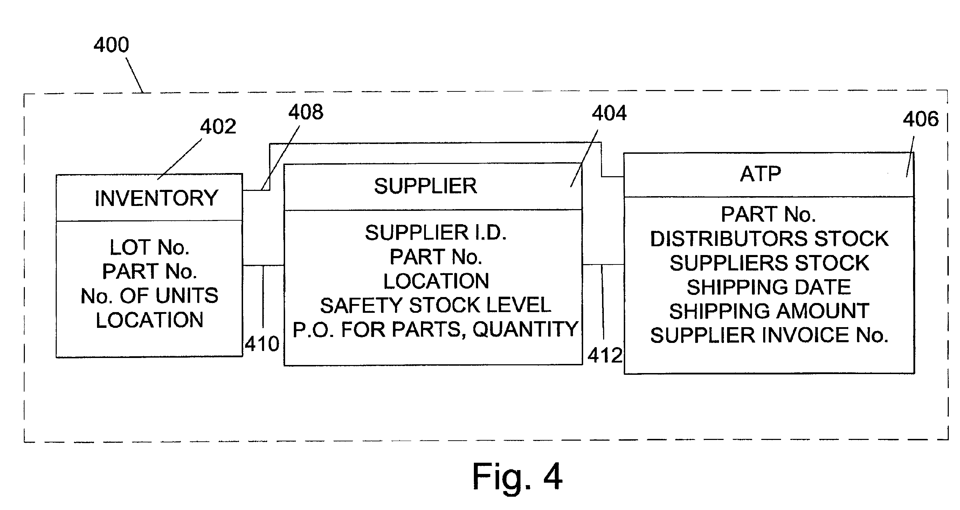

Figure 4 shows the basic elements of a generalised relational database 400 suitable for implementing the system; the database may be embodied in database 220 of Figure 2. As is known to those skilled in the art, a relational database comprises a set of data elements conceptually arranged as a set of logically linked tables comprising records with corresponding fields.

In Figure 4 inventory table 402 stores records comprising a lot number, part number, number of units (of the part) and a lot location. Supplier table 404 comprises a supplier identifier, part numbers allocated to the supplier, supplier locations, safety stock levels for the supplier's parts and purchase order information for quantities of parts. ATP (available-to-promise) table 406 comprises a part number, a distributor's stock level, a supplier's stock level, a shipping due date, a shipping amount, and a supplier's invoice number (linked to the order). The tables have corresponding fields as indicated by links 408, 410 and 412. In practice, in a specific embodiment, tables 402, 404 and 406 may each comprise a plurality of tables of data.

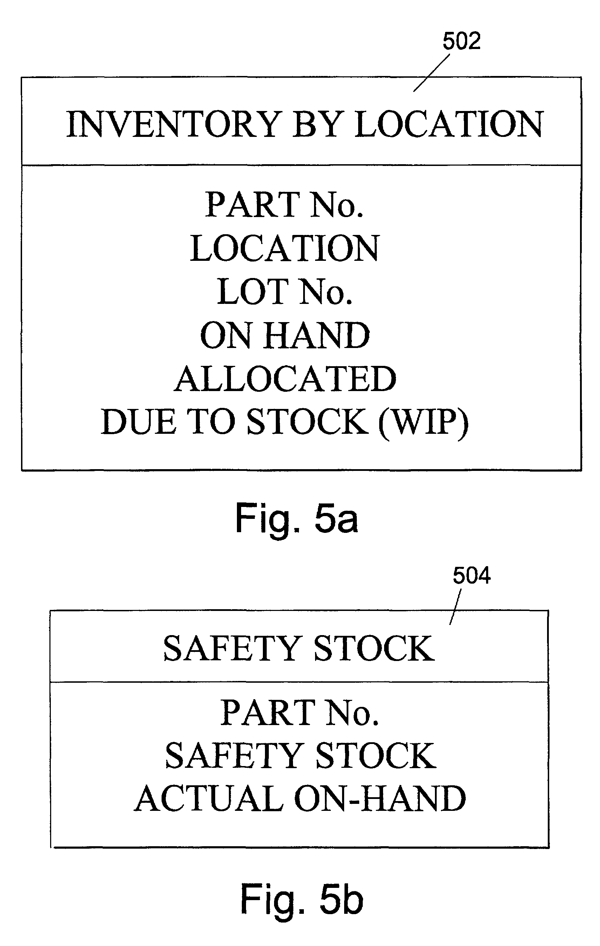

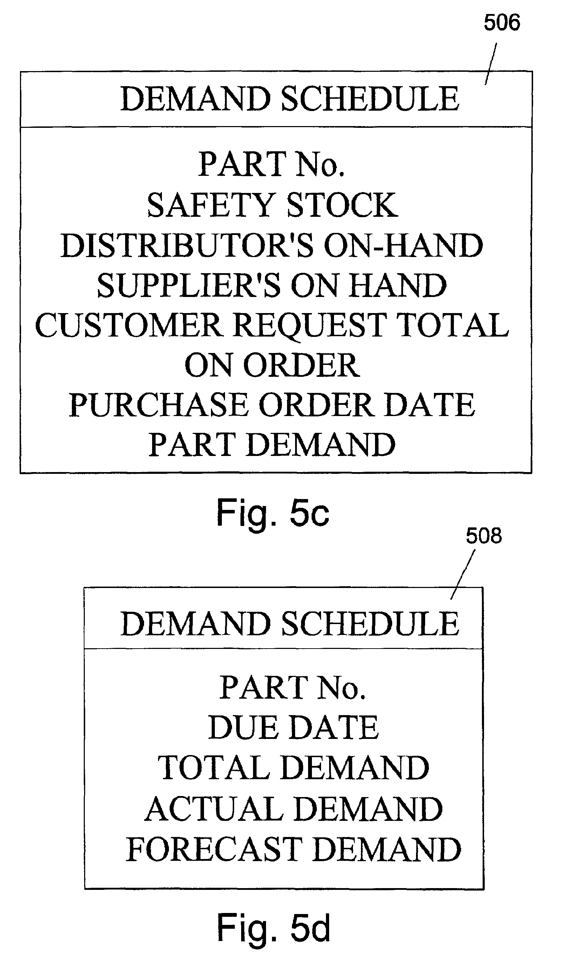

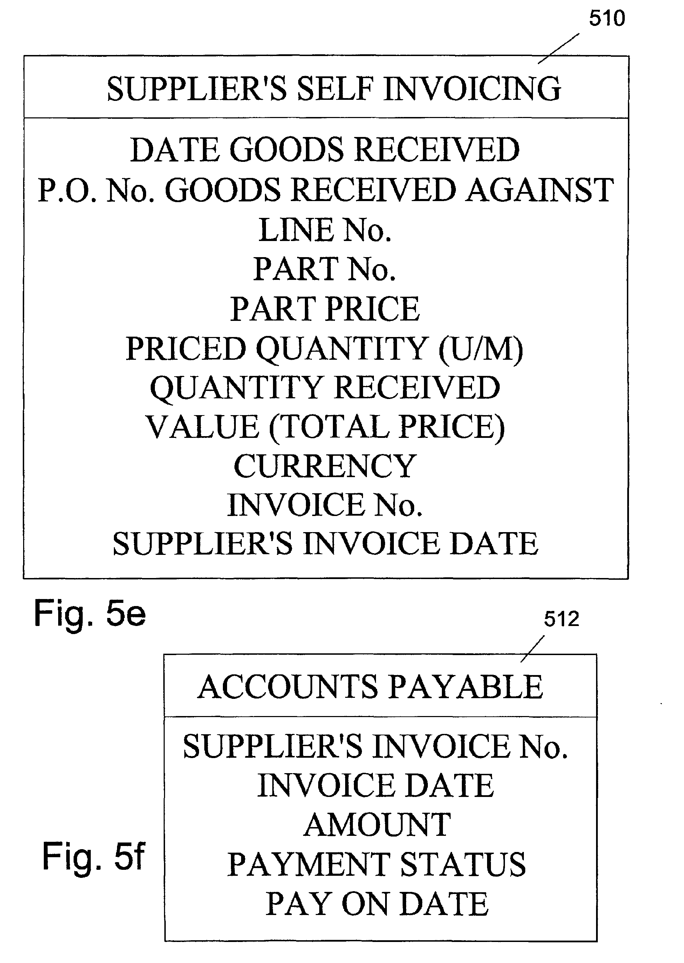

Referring now to Figure 5, this shows elements of a more specific embodiment of a database for the system. The tables in Figure 5 are for use by a supplier, but they may also be accessed by, for example, the distributor. Table 502 stores information on supplier inventory and its location. Thus, for example, a part number may be used to retrieve a table of data comprising lot number, lot location, lot quantity (number of parts on hand), lot allocation data (such as the number of parts allocated to an order) and, for work-in-progress, a due-to-stock date. Safety stock table 504, linked to inventory table 502 by part number, provides information on the minimum agreed safety stock level and actual on-hand number of parts held by the supplier for each part record.

Figures 5c and 5d show tables of demand schedule related data. Demand schedule table 506 stores records for parts indicating a safety stock level, distributor's and supplier's on-hand quantity of parts, a total number of customer requested parts, on-order information indicating a number of parts ordered on a distributor's purchase order, and the purchase order date, and part demand information. The part demand information, conceptually stored in table 508, comprises a part number, a due date, and a total number of parts demanded by the due date, (that is promised to a customer by the due date) comprising an actual demanded number of parts and a forecast demanded number of parts, the forecast demand relating to a customer order which it is known is going to be placed, but which has not been logged into the database by the normal order logging procedure. Demand schedule table 506 links to safety stock table 504 and to part demand table 508 for safety stock and part demand information.

Figures 5e and 5f show, conceptually, a supplier's self-invoicing table 510 and an accounts payable table 512. The supplier's self-invoicing table 510 stores information relating to a date goods or parts are received by the distributor (and logged into a distributor warehouse), and a purchase order number (from the distributor) that the goods or parts are received against. Supplier's self-invoicing table 510 also comprises a line number which comprises a sequential digit to identify uninvoiced receipts, a part number, a part price, a priced quantity (for example, price per 100 items) and a quantity (of goods or parts) received. The quantity received is the quantity of parts logged as having been received at the distributor and may be less than the number of parts provided by the supplier to the distributor to take account of, for example, faulty parts. Table 510 also includes an invoice value, currency, invoice number and invoice date.

Accounts payable table 512 also includes the invoice number and invoice date, as well as the invoice amount and payment status and pay-on date information. The payment status includes status values to indicate that the suppliers self-initiated invoice has been validated for payment, and to indicate that the invoice has been paid. Accounts payable table 512 is linked through, inter alia, the invoice number and date, to supplier's self-invoicing table 510.

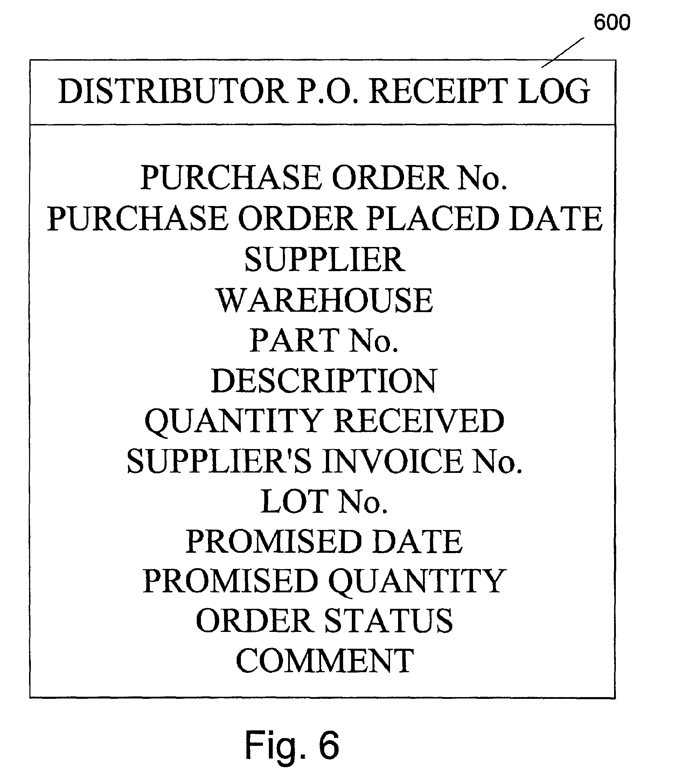

Figure 6 shows a distributor purchase order receipt log table 600. This includes a purchase order number and date against which goods can be logged into the distributor's warehouse. In this context, "warehouse" refers to both the physical storage location or locations at which parts are held by the distributor, and also to the database record of parts received and stored in the distributor's physical warehouse. When "warehouse" refers to a "virtual warehouse", it may encompass a plurality of different physical locations. Distributor receipt table 600 also includes supplier information, to identify from which supplier parts have come, and a warehouse number to indicate where the received parts are located. The table also includes part number information, a part description field, a quantity received field, a (supplier's) invoice number, a lot number, a promised date (referring to the ATP information provided to the customer), a promised quantity (likewise referring to the ATP data), an order status, and a comment field. The order status field may indicate supplementary information relating to the order such as an order complete status or an under-shipped status.

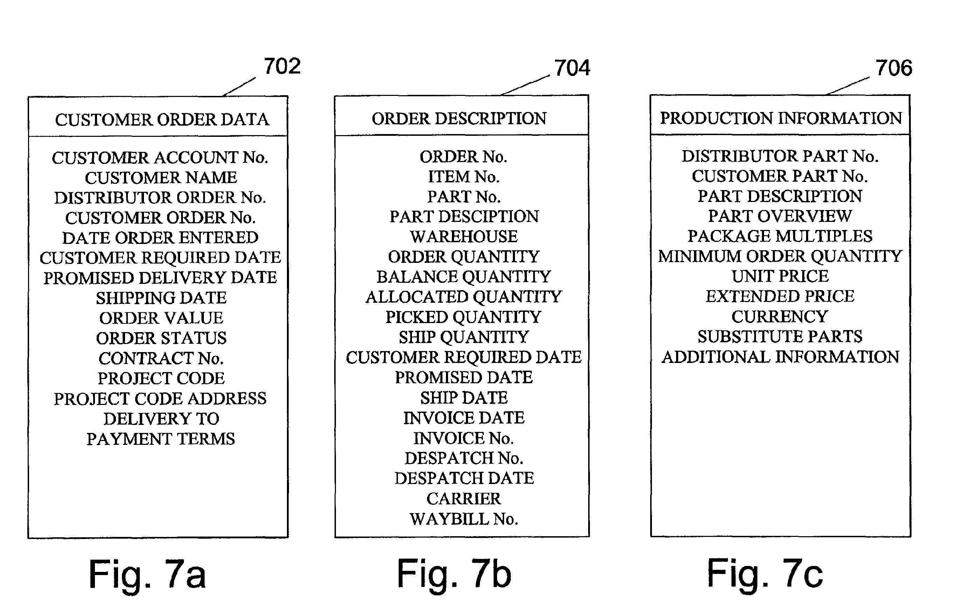

Figures 7a to 7c show data tables for providing data for customer accessible web pages. Customer order data table 702 comprises a customer account number and customer name, a distributor order number and the customer order number, a date the order was entered, a customer required date (for the ordered parts) and a promised delivery date. The table also includes a shipping date, order value, order status, delivery to information, such as a customer address, and information indicating payment terms, for example, "cash with order". The order status may store a value indicating one or more of the following order conditions: order entry hold, disbursement hold, order on hold, order acknowledged, allocated, pick list printed, pick list confirmed, dispatch note printed, order shipped, order invoiced, order carried forward, part allocated, order deleted and undefined status.

In one preferred embodiment orders are only permitted to be made against specified projects, details of which have been set up between the customer and distributor. This provides a safeguard against the unnecessary or incorrect ordering of parts to protect both the customer and distributor. Thus customer order data table 702 may also include a project code and, since a project may be associated with more than one address, against which orders may be placed, a project code address field may also be provided.

Order description table 704 comprises records of detailed order information including an order number, part number, part description, distributor warehouse number, order quantity, balance quantity (outstanding on the order), allocated quantity (ATP-related information relevant before an order is delivered), a picked quantity (of goods selected for shipping), a shipped quantity, a customer required date (for the order), a promised date (based on an ATP determination), a shipped date, an invoice date, an invoice number, and, associated with shipping of a consignment of parts, a dispatch number and dispatch date, a carrier identifier, and a waybill number.

Product information table 706 provides customer accessible product information including a distributor's part number, a customer part number (since this may be different), a part description and overview, and order information. The order information includes package multiples, that is, the multiple quantity in which individual parts are packed together, a minimum order quantity, a unit price and an extended price (for example, for bulk orders) and a currency in which the price is quoted. Preferably, product information table 706 also includes a list of substitute parts which could be employed were the desired part not available, or not available in sufficient quantity by a customer's desired date, and other additional information, such as part-specific information.

The operation and features of the software in an embodiment of the system will now be described.

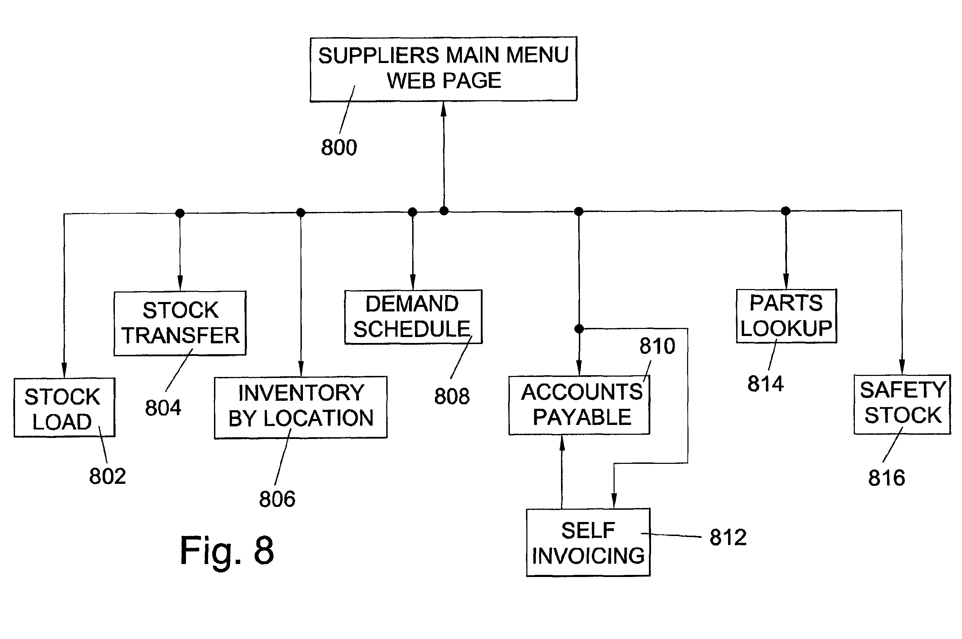

Referring to Figure 8, this shows schematically a supplier's main menu web page 800 offering links to a plurality of further pages for accessing supplier data or executing supplier procedures. Thus, main menu page 800 allows selection of a stock load (or "issue/receipt") procedure 802, for loading supplier stock into a virtual "supplier warehouse", and a stock transfer procedure 804 for moving lots of parts between locations in the supplier warehouse and, optionally, for amending data in the supplier warehouse to correct errors and/or for transferring stock out of the supplier's warehouse. Inventory-by-location application 806 may be used by a supplier to view locations at which lots of a part are held, and demand schedule application 808 provides a supplier with a table for a selected part listing a series of due dates and a demanded number of parts which must be provided by those dates.

This application also allows access to accounts payable application 810 which allows a supplier to view a list of their invoices together with the invoice date, amount and pay on date as well as a status code. This application may also be accessed independently of self-invoicing application 812 and self-invoicing procedure 812 allows the supplier to invoice themselves for goods received by the distributor, subject to a check that the goods have in fact been received. Parts look-up application 814 allows a supplier to access information on a selected part and safety stock application 816 provides a safety stock report listing parts, their agreed safety stock levels and actual on-hand numbers of the part at the supplier.

The supplier's main menu web page 800 has restricted access and further access controls may be implemented to restrict access to the accounts payable application 810 and the self-invoicing procedure 812.

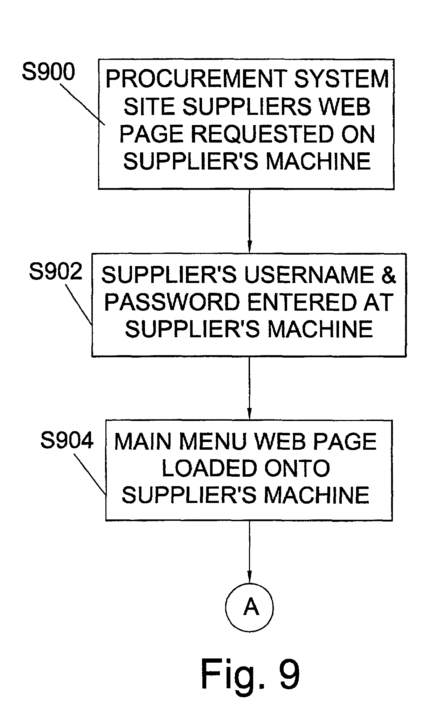

Figure 9 shows steps in a procedure for logging on to the supplier's main menu web page 800. Initially, at step S900, an access control web page is loaded onto a supplier's terminal, such as that illustrated in Figure 3, and displayed by a web browser such as web browser 304. The supplier then enters their user name and password and, optionally, a further digital certificate, at step S902 and these are transmitted from the supplier's terminal to a central computer system, such as the system incorporating mainframe 218 and web 212 and e-mail 214 servers, where they are validated. Once permission for the supplier to access the system has been confirmed, the supplier's main menu web page is transmitted from the central computer system to the supplier's terminal where it is displayed by the web browser (step S904). The access control procedure may be implemented in any conventional manner, for example, using a C or Per1 code module coupled to web server 212 and/or interface application 216. Preferably, even when access has been granted to a supplier, that supplier is only able to access data relating to parts which it has agreed to supply to the distributor. Since each supplier has its own set of part numbers, this can be achieved by means of a table listing which part numbers an identified supplier has permission to access related information on. Once a supplier has access to the supplier's main menu web page, other procedures such as the stock load and stock transfer procedures may be invoked.

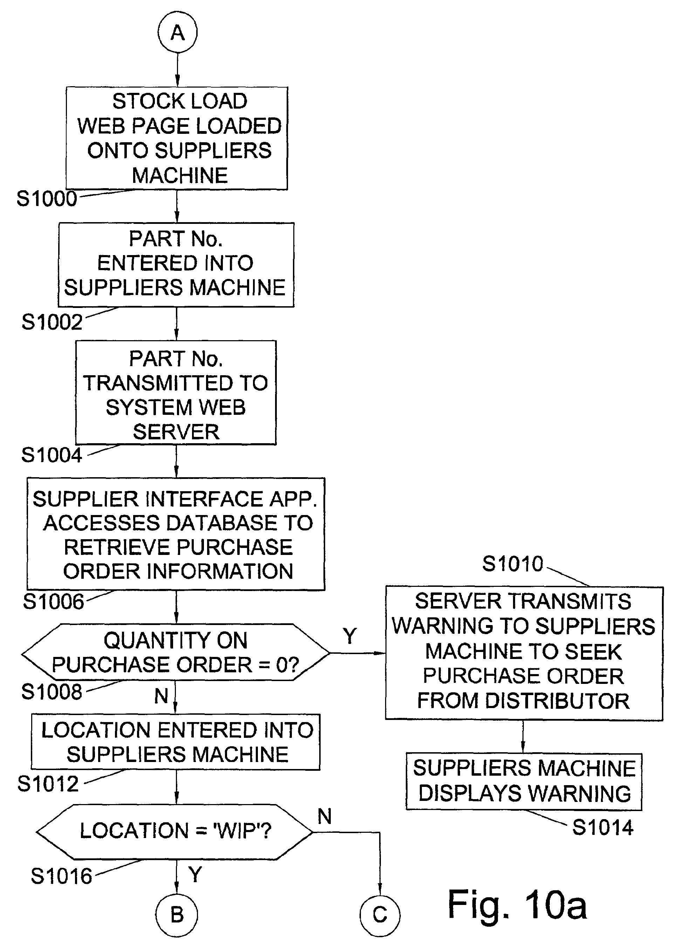

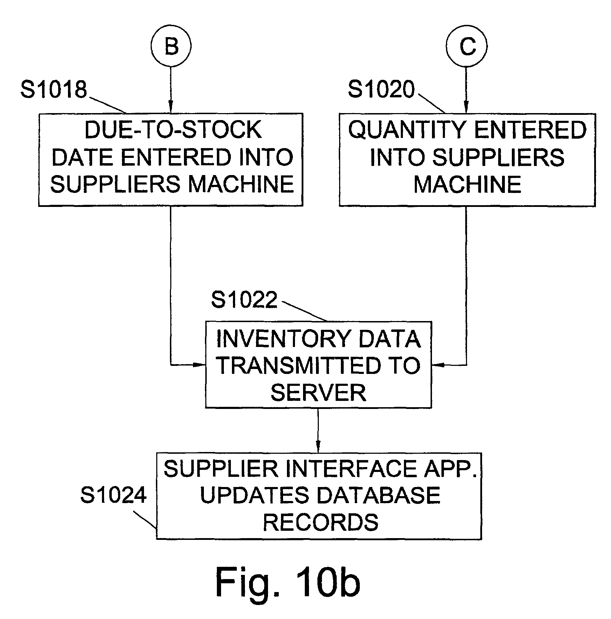

Referring now to Figures 10a and 10b, these illustrate the supplier's stock load procedure, using which a supplier enters into database 220 information relating to the quantity and location of lots of parts held by the supplier. Figure 10a continues the procedure of Figure 9 from 'A'.

At step S1000 a web page for the stock load procedure is transmitted from the central computer system to the supplier's terminal and displayed on the terminal's web browser. A supplier then selects or enters a part number for one of the parts the supplier has agreed to supply, at step S1002, and at step S1004 this part number is transmitted to the system web server 212 and thence to mainframe 218.

A supplier interface application such as an interface application in storage 230 of Figure 2, then accesses database 220 to retrieve and check purchase order information to ensure that the supplier is loading parts into their warehouse against a valid purchase order (step S1006). The system may store more than one purchase order per supplier against which parts may be loaded, for example, to control the price of parts. At step S1008 a check is made to determine whether the quantity on purchase order is equal to zero. If the quantity is equal to zero, in step S1010 a warning is transmitted to the supplier's terminal to alert the supplier to the need to seek a purchase order from the distributor, and displayed to the supplier at step S1014.

If the quantity on purchase order is not equal to zero, at step S1012 the supplier enters a part location into the supplier terminal 202. The system then determines, at step S1016, whether or not the entered location corresponds to a work-in-progress location. If the location does not correspond to work-in-progress, for example, corresponding instead to a location at the supplier or distributor, at step S1020 the supplier enters the quantity of parts present at the specified location. If, instead, the location does correspond to work-in-progress, a due-to-stock date, at which the work-in-progress should be complete, is entered into the supplier's terminal 202 at step S1018.

Following this, at step S1022, the inventory data entered by the supplier is transmitted to the central computer system where, at step S1024, a supplier interface application updates database 220. At this point, a lot number is also assigned to each batch of parts entered, and this is also recorded in the database. The lot number may comprise, for example, the relevant purchase order number against which the parts are loaded together with an additional two digits, for example allocated sequentially to each successive batch loaded. The lot number assists part traceability and quality control.

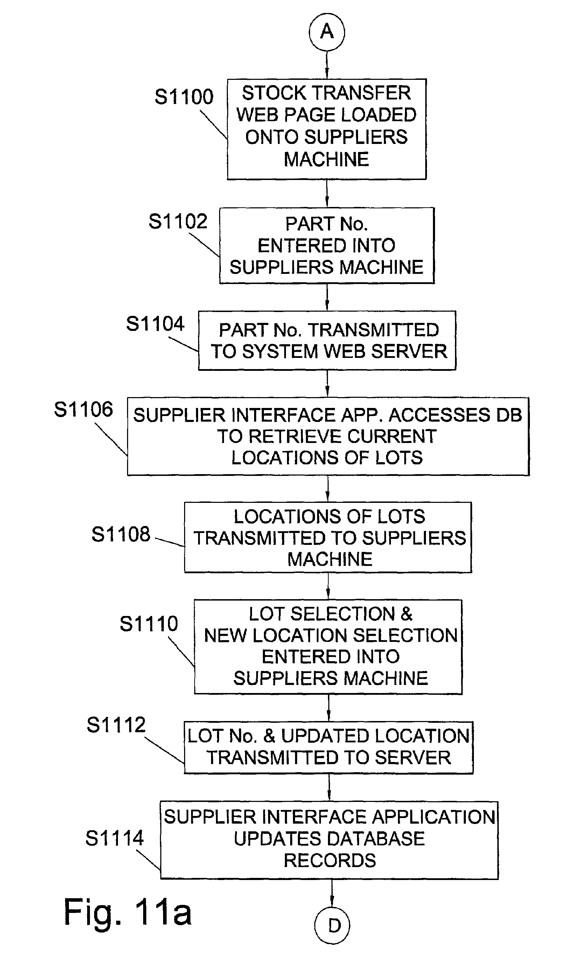

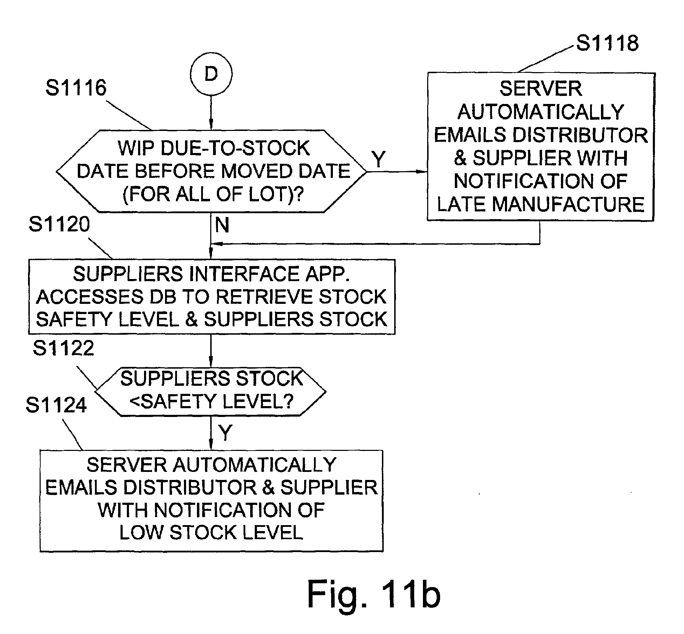

Figures 11a and 11b show a flow diagram of stock transfer procedure 804, which is used for modifying data within the supplier's warehouse to reflect movement of a supplier's physical stock. The procedure contains the procedure of Figure 9 at 'A'.

At step S1100 a web page for stock transfer procedure 804 is loaded onto supplier terminal 202. A part number is then either selected or entered using the web page, at step S1102, and transmitted, at step S1104, to the central computer system. Here, at step S1106, a supplier interface application accesses database 220 to retrieve current locations of lots of the selected part; such locations include locations at the distributor, locations at the supplier, and work-in-progress and in-transit locations. A single lot of parts may be split amongst two or more locations. For example, where a work-in-progress lot has been partially completed, the lot will be in stock at the supplier and also at a work-in-progress location, the numbers of parts at each location reflecting the amount of the work-in-progress which has been completed. As described below, parts at some locations, such as "reserved" locations, are not available to the ATP calculation. The lot information is transmitted to supplier terminal 202 at step S1108, and displayed as a web page.

At step S1110, the supplier selects a lot and enters or selects its new location; optionally all of the lot may be moved to take account of partially complete work-in-progress. The updated location of the lot is transmitted to the central computer system at step S1112, and a supplier interface application updates database 220 at step S1114.

At step S1116, if stock has been moved from a work-in-progress location, the system checks whether the work-in-progress due-to-stock date is before the moved date, to determine whether or not the work-in-progress has been completed on time. Preferably, the system determines whether or not all the lot has been moved before the work-in-progress due-to-stock date to determine whether or not all the work-in-progress has been completed on time. If the due-to-stock date is before the moved date, the work-in-progress has been completed late and, at step S1118, the system automatically e-mails the distributor and supplier with notification of the late manufacture, before proceeding to step S1120. If the manufacture was all completed on time, the system proceeds directly to step S1120. Although in this procedure work-in-progress is only checked when the work-in-progress stock is moved, the skilled person will appreciate that the system could instead automatically monitor work-in-progress and provides an immediate e-mail notification as soon as a due date or time for completion is missed.

At step S1120, the system accesses database 220 to determine the total on-hand supplier's stock of the moved part and to retrieve the supplier's agreed safety stock for that part. The system then checks whether the supplier's on-hand stock is less than the safety stock level at step S1122 and if the stock is greater than the safety level, the procedure ends. However, if the stock is less than the minimum safety level, both the distributor and supplier are e-mailed with notification of the supplier's low stock level of that part.

E-mails are sent and received by e-mail server 214 of Figure 2 and the web page interface displays are managed by web server 212. Mainframe 218 is used to access database 220. The functionality of the system may be provided by a programme code architecture as illustrated in Figure 2, but the skilled person will appreciate that this is not limiting and that there are many ways in which the programme code to implement the functionality of the system may be distributed amongst the elements illustrated in Figure 2. For example, although the supplier procedures have been described in terms of web pages provided by web server 212, these could also be implemented by dedicated software running on supplier terminal 202 in direct communication with mainframe 218 and/or database 220. Referring to the more generalised architecture of Figure 1, the skilled person will recognise that the choice of where to locate the software necessary to provide the required system functionality is a matter of design choice.

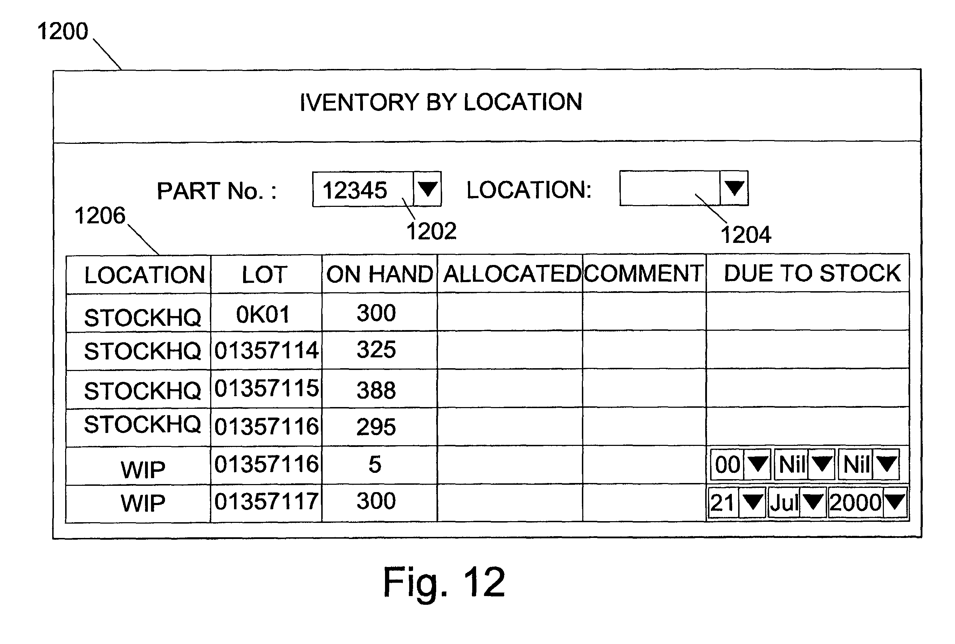

Figure 12 shows an exemplary web page presented to a supplier on a browser window in supplier terminal 202. In Figure 12, inventory by location data is displayed in window 1200. A part number is selectable using drop-down list 1202 and a location is selectable using drop-down list 1204 (in the illustrated example, left blank). The window then displays a table 1206 of locations and lot numbers for the selected part. Further information presented in the table includes the quantity of parts in the lot on hand, an indication of the number previously allocated (and thus not available to a subsequent ATP calculation), and a comment field. For work-in-progress there is also a due to stock date by which date the work-in-progress (WIP) should be complete and the parts available to help meet customer orders.

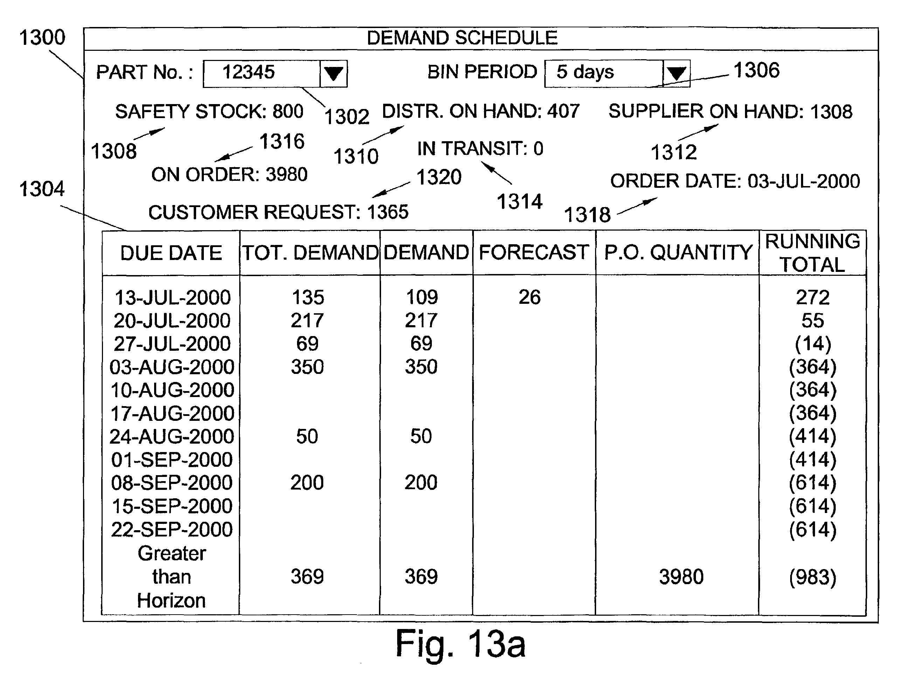

Figure 13a illustrates an example of a demand schedule web page 1300, for presentation to a supplier on a web browser window displayed on terminal 202. This web page also has a drop-down list 1302 for selecting the number of a part provided by the supplier. A table 1304 presents the demand schedule for the selected part, ordered by due date. The orders are grouped in "bin periods" selected using drop-down list 1306, in the illustrated example, 5 working days. If a bin period of 1 day is selected, the exact due date of the orders are indicated. The demand schedule 1300 lists further information relating to the selected part including a safety stock level 1308, a distributor's on-hand quantity 1310, a supplier's on-hand quantity 1312, and a supplier to distributor in-transit quantity 1314. The distributors on-hand quantity is non-purchased stock available to meet the indicated demand and comprises stock located at and owned by the distributor. A distributor's purchase order quantity of the part is indicated at region 1316 and a date on which the purchase order was placed is indicated at region 1318. Total customer request for the part is indicated at region 1320.

Table 1304 of the demand schedule indicates, week-by-week in the illustrated example, total demand for the selected part, split into actual demand and forecast demand as described above. The final row or record in the table indicates a demand for, in the example, 369 parts to be delivered by a date which is beyond the determined ATP horizon of the part, as explained above. Also beyond the ATP horizon is the distributor purchase order, in the example, for 3980 units of the selected parts. Together with the (negative) current indication of demand for 1414 units, 2197 (=3980-1414-369) units are notionally available for the supplier to manufacture against a purchase order. A "parts available" figure is calculated but not displayed. This figure represents the distributor's on-hand stock, less the safety stock level, less the total (cumulative) demand so that, for example, as of 13 July 2000, in the example (-528) units (=407-800-135) of the selected parts are notionally available.

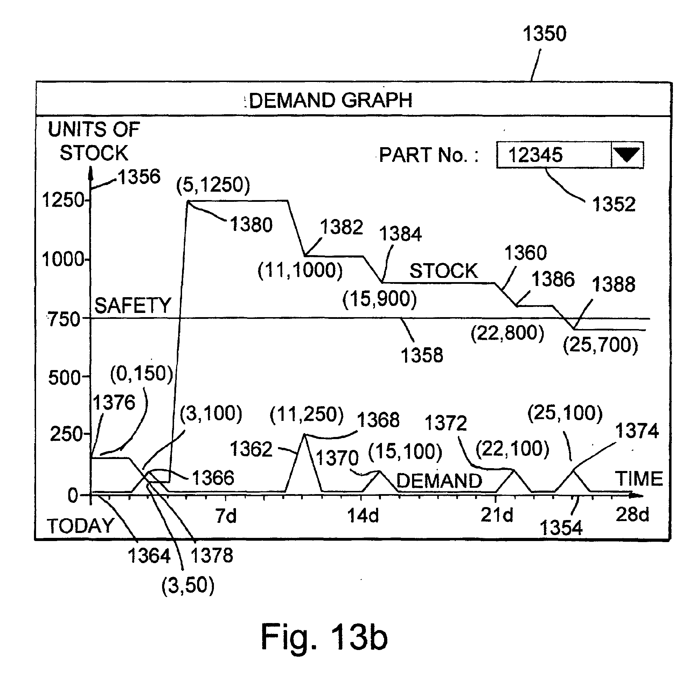

A final column in table 1304 of the demand schedule provides a running total of available stock calculated by adding the distributor's on-hand stock to the in-transit stock and subtracting the (running) total demand. This running total figure is useful to a supplier because it allows a supplier to determine when stock is to be shipped to the distributor. If the running total is positive the distributor's stock is sufficient to meet demand; when the running total is negative the distributor requires additional parts from a supplier in order to meet their customers' demands. In the example of Figure 13 the "bin period" is five days, but by selecting a bin period of one day a supplier can determine when, to the day, the distributor's stock of parts goes to zero.

Monitoring code, as described with reference to Figure 2, monitors the running total figure in real time and initiates an e-mail notification to a supplier of a part shortly before the distributor's stock is due to fall to zero. The warning is sent early enough to allow sufficient time for stock shipped from the supplier to reach the distributor in time to meet the known demand. Thus, the e-mail warning is sent at a time when the stock is due to fall to zero offset by at least the supplier-distributor shipping transit time, in one embodiment, two working days for shipping within the distributor's home country. A flag for the e-mail notification is generated in real time - that is, the running total figure is monitored substantially continuously - but the e-mail notification is only sent out to the supplier at a predetermined, such as a batch processing time when e-mails for all suppliers are sent out together, for example overnight. This alleviates inundation of a supplier with e-mails. Preferably the e-mail notification sent out includes a hyperlink to stock transfer procedure 804 to facilitate a supplier taking action to correct the potential problem by transferring stock to the distributor.

Referring now to Figure 13b, this illustrates a demand graph planning tool 1350 for display on a supplier terminal as a demand graph web page. In one embodiment of the system the demand graph is accessible by means of a hyperlink provided on the supplier web pages described above including the web pages for stock load 802, stock transfer 804, inventory by location 806, demand schedule 808, parts look-up 814 and safety stock 816.

In more detail demand graph 1350 includes a drop-down list 1352 for selecting a number of a part provided by the supplier. A demand graph for the selected part is then presented to the supplier.

Referring in more detail to Figure 13b, the demand graph has an x axis 1354 denoting time and a y axis 1356 denoting units of stock. The time axis preferably begins at a current time and/or date and covers a predetermined interval, in the illustrated embodiment, a period of four weeks from today's date. The graph has a curve 1362 showing a level of demand for the selected part corresponding, in a preferred embodiment, to the "Total Demand" column of demand schedule 1300 (although the values illustrated by demand graph 1350 have been selected to illustrate the demand graph principle rather than to correspond with the actual figures given in the example of the demand schedule illustrated in Figure 13a). A second curve 1360 on demand graph 1350 shows a predicted stock level, as described in more detail below, and a third, optional curve 1358, shows a level of safety stock for the selected part which, as shown, will usually be flat. Although in the illustrated embodiment of the demand graph the demand level and stock level are indicated by lines on the graph, other graphical representations can also be used. The demand graph may also include supplementary information such as one or more data items 1308 to 1320 as described with reference to Figure 13a. The demand graph page may also include a table of data points used to construct curves 1360 and 1362 to facilitate reference to values of stock level and stock demand over the period displayed on the graph.

The predicted stock level at a date, as depicted in demand graph 1350 is determined by calculating a predicted total stock level at the date and subtracting a cumulative total demand at the date. The predicted total stock level at the date is calculated by adding the distributor's on-hand stock of the selected part, the supplier's on-hand stock, the in-transit stock, and any work-in-progress (WIP) due to stock by the specified date (see Figure 12 and the accompanying description). Preferably the addition does not taking into account any work-in-progress which is overdue at the specified date, that is, work-in-progress which has not been (or will not be) completed by the date.

In the example shown in Figure 13b the safety stock level begins at "today" (day 0) at point 1376 with 150 units of stock. The initial demand, at point 1364, is zero. At day 3, there is a demand for 100 units of the part (point 1366) and the stock level falls to 50 units (point 1378). At day 5, an additional 1200 units of the part are predicted to be added to the stock level as a result of the completion of work-in-progress and thus the stock level at point 1380 is 1250 units. There is a demand for a further 250 units of stock at day 11 (point 1368 on demand curve 1362) and thus the stock level falls to 1000 units (point 1382 on stock level curve 1360). At day 15, there is a demand for a further 100 units of stock (point 1370) and the stock level falls to 900 units (point 1384); at day 22 there is a further demand for 100 units (point 1372) and the stock level falls to 800 units (point 1386). The safety stock level 1358 is constant at 750 units. At day 25 a further demand for 100 units of stock (point 1374) brings the stock level down to 700 units (point 1388), below the safety stock level. It can be seen that the falls in stock level essentially correspond to the integral of demand curve 1362.

The demand graph 1350 assists a supplier in planning their inventory management. Thus the demand graph allows a supplier to see, by simple inspection, whether and when the stock level of a part is predicted to fall below the safety stock level. The supplier can then take action in advance to correct this, for example, by ordering in or manufacturing additional stock. More importantly, a supplier can tell, by inspection, when the distributor is at risk of letting down a customer by not fulfilling an order: a peak in the demand curve 1362 which causes the stock level curve 1360 to cross the x-axis, i.e. to fall below 0 units of stock of the part, represents a customer order which it is predicted will not be met unless remedial action is taken (since the demand graph is primarily intended to provide an advance warning of a low stock level supplier-distributor part shipping time is not taken into account although, if more precise time predictions were required, the stock level calculation for a specified date could be carried out using supplier and WIP stock levels offset by the shipping delay).
Inspection of demand graph 1350 also allows a supplier to estimate the effect of a batch of work-in-progress not being completed on time and, optionally, this may be incorporated into a tool to allow a supplier to view the effect on the demand graph of omitting a specified batch of work-in-progress from the stock level calculation.

A monitor program in storage 236, running on mainframe 218 (see Figure 2) operates to calculate, for each part provided by a supplier, the above described predicted stock level over a predetermined period, such as four weeks, from a current date. Where the predicted stock level of a part is determined to fall below zero units the monitor program sends e-mail data to e-mail server 214 for sending an advanced warning e-mail to the relevant supplier (or suppliers). The e-mail data includes the part number and, preferably, a date at which the stock level of the part number is predicted to fall below zero units. Optionally the warning may also be provided when the stock level is predicted to fall to exactly zero units within a margin of tolerance. As described above, such e-mails will normally be sent out as a batch, for example, overnight, to advise the supplier of all part numbers for which the stock level is predicted to fall below zero.

A supplier receiving such a warning can take action to raise the predicted stock level by, for example, bringing work-in-progress forward, adding new work-in-progress, and changing work-in-progress dates so that, for example, work-in-progress which may have been overdue, and thus ignored in the predicted stock level calculation, is no longer overdue and thus included in the calculation. Preferably, therefore, the e-mail notification includes a link to the stock load (issue/receipt) web page 802 described above; preferably the e-mail also includes a hyperlink to the demand graph web page.

The total time period covered by demand graph 1350 is preferably chosen to be approximately equal to the "ATP fence", that is to the replenishment time for a part if action is taken immediately to start manufacturing the part. In many cases it takes around four weeks to produce a part from scratch and thus it is convenient if demand graph 1350 covers a period of approximately 28 days, although the exact period may be modified depending upon the part or type of part for which the graph is displayed.

If there is a major supply problem, the demand graph tool allows the distributor to warn a customer that the promised delivery date or dates for the part cannot be met. The promised delivery date may then be manually modified by a customer services department of the distributor using customer services terminal 219 (Figure 2), manually overriding the available-to-promise system in a way similar to that described below with reference to a customer order change request. The demand graph 1350 is generated by code in supplier interface applications storage 230 running on mainframe 218 and is generated taking account of any changes to data in database 220 so that any effects of these changes can be viewed by a supplier immediately, to check whether the desired result has been achieved.

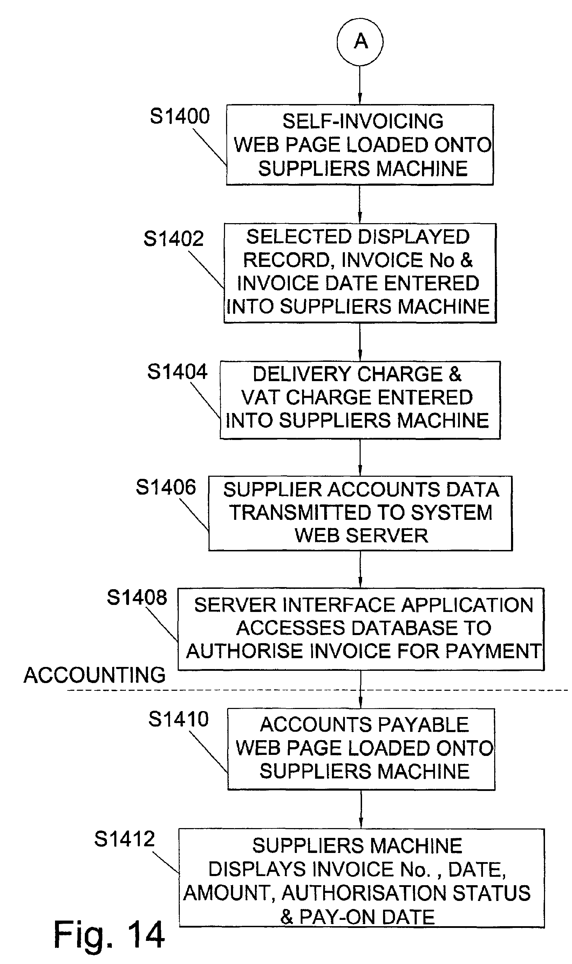

Referring now to Figure 14, this illustrates the self-invoicing procedure 812 of Figure 8, and continues from the supplier's main menu login and access control procedure described with reference to Figure 9.

At step S1400 a supplier self-invoicing web page is downloaded from the central computer system onto the supplier's terminal 202. The web page is displayed by the supplier's terminal and the displayed data, in one embodiment, includes data selected from the supplier's self-invoicing table 510 illustrated in Figure 5e. When the distributor receives parts from the supplier a record is stored in database 220 which includes the date the parts were received, the purchase order the parts were received against, the purchase order price, the purchase order line number, the part number and quantity received, the total price and the associated currency. At step S1402 the supplier selects a displayed record which includes, in one embodiment, at least a purchase order number, part number, quantity and order receipt date, for self-invoicing. The supplier may select more than one of the displayed records for invoicing, but can only select orders which have been received or orders which pre-date delivery by the transit time for the ordered parts from their location to the distributor.

In addition to selecting displayed records for invoicing, the supplier also enters an invoice number and an invoice date and, at step S1404, may add a delivery charge and a supplemental tax charge such as value added tax. The information entered by the supplier is then submitted to the central computer system in step S1406, and at step S1408, database 220 is accessed to check and authorise the invoice submitted for payment. The checking includes a step of matching the supplier's invoice to the purchase order for the invoiced goods.

The self-invoicing procedure may be ended at this point or, alternatively, the procedure may be continued as illustrated below the dashed line in Figure 14 to load an accounts payable web page onto supplier terminal 202, at step S1410. Preferably, the accounts payable web page is also accessible separately from the supplier's main menu web page 800, as illustrated in Figure 8. The supplier is then able to view, at step S1412, a list of invoice numbers and associated invoice data, as set out in accounts payable table 512, illustrated in Figure 5f. Thus the supplier is able to access a display of invoice number, invoice date, invoice amount, payment authorisation status, and a pay-on date on which the invoice will be paid.

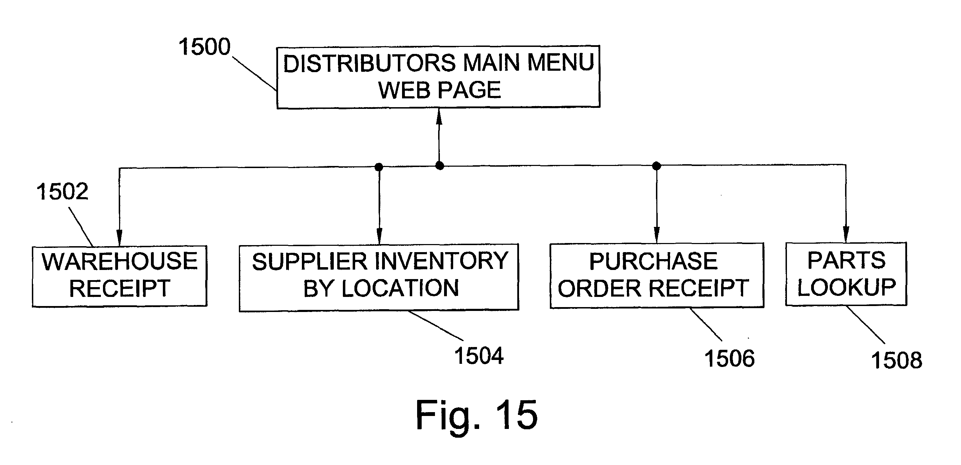

Referring now to Figure 15, this illustrates procedures accessible from a distributor's main menu web page 1500. Procedures accessible from the main menu page include warehouse receipt procedure 1502, for logging in goods received at the distributor, supplier inventory by location page 1504, for displaying lots of parts and their locations in a similar manner to that illustrated in Figure 12, purchase order receipt procedure 1506, for receiving stock against a purchase order, and parts look up procedure 1508, for displaying detailed information on selected parts, such as part description and substitute information.

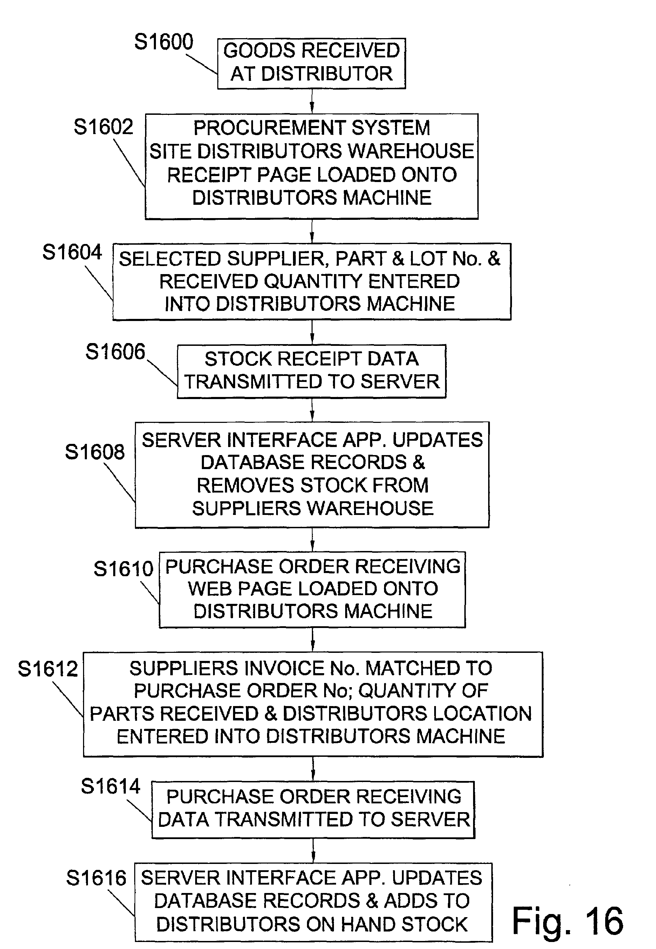

Referring now to Figure 16, this shows a procedure for entering parts received by a distributor into a virtual distributor's warehouse. At step S1600 goods are received at the distributor and at step S1602 a distributor's warehouse receipt page is downloaded onto a distributor's terminal 204 such as the terminal illustrated in Figure 3. The distributor then uses the warehouse receipt web page to select a supplier, part and lot number and to enter a received quantity of the parts (step S1604). This stock receipt data is then transmitted to the central computer system at step S1606 and, at step S1608, records in database 220 are updated to reflect the movement of stock. More particularly, stock is decremented from the relevant supplier's location (which will normally be an in-transit location) and incremented in the distributor's warehouse.

The distributor's warehouse may comprise a single location or it may comprise a plurality of locations corresponding to separate physical locations at which parts received by the distributor may be held; in the latter case a distributor's warehouse location may also be entered by the distributor. If the supplier sends stock to the distributor too early, the system will not allow it to be booked in and the goods are physically rejected and returned to the supplier. In one embodiment, stock cannot be booked in three or more days before when it is due. The date at which the goods are entered into the distributor's warehouse determines the earliest permitted self-invoicing date (which may be adjusted to take account of transit time, as already described).

Following the updating of database records for the distributor's warehouse, a second stage of the goods receipt procedure begins at step S1610, when a purchase order receiving web page is loaded onto distributor terminal 204. Stock is received at the distributor against an open purchase order which is set beyond the trading time fence, with a quantity which is estimated to be sufficient to fulfil at least short-term customer demand as established by the ATP system. In a preferred embodiment, the lot number provided in step S1604 (or re-entered at this point) links to a distributor purchase order number which is displayed on the distributor's order receiving web page. At step S1612, an invoice number provided by the supplier is then entered into the purchase order receiving web page and is thus matched to other data items on the page, which include the purchase order number, quantity of parts received and distributor's warehouse location; if an invoice number is not available (or, as an alternative) a delivery note number may be used instead. This further information is then transmitted back to the central computer system at step S1614 where, at step S1616, the records of database 220 are updated and the booked in parts are added to the distributor's on-hand stock.

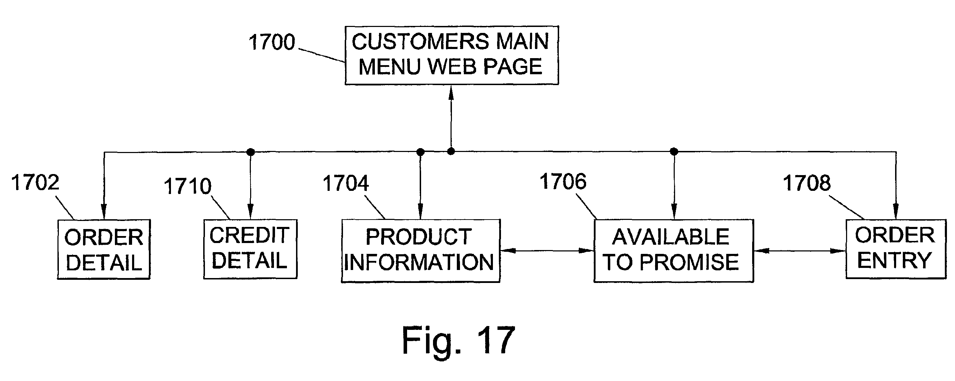

Figure 17 shows a menu structure for a customer's main menu web page 1700, for display on a customer terminal 200. Access to the customer's main menu web page 1700 is policed by an access control system, not shown in Figure 17, such as a requirement to enter a customer number and/or password. The main menu page allows access to one or more order detail web pages 1702 which provides access to customer order data, including the data listed in table 702 and described with reference to Figure 7a. The main menu web page also allows access to product information web pages 1704, providing product information, for example, as set out in table 706 and described with reference to Figure 7c. Available-to-promise (ATP) web page 1706 allows access to ATP information as described below. Order entry web page 1708, again accessed via main menu page 1700, also provides access to the available-to-promise (ATP) system and allows a customer to place orders with the distributor. The product information, ATP and order entry web pages preferably include hyperlinks to one another to simplify ordering a part after its specification and availability have been checked.

Finally, credit detail web page 1710 provides financial information for a customer including a total credit limit and an available credit limit. This credit information is preferably presented graphically, for example as a pair of adjacent bars on a bar graph, to visually indicate to a customer their available credit as a proportion of, or alongside, their total permitted credit. Such a graphical representation of the customer's available credit assists a customer in determining the risk of a "credit hold" in the near future.
The credit detail web page may also display other financial information, such as a total value of orders placed but not yet shipped, and the customer's highest historical accounts receivable balance. Date information such as a date the customer's account was established, a last payment date, a last order placed date, a last shipment date, a last invoice date, and a statement date are preferably also displayed.

The product information web pages preferably include a product/pricing information web page displaying, in tabular form, a list of distributor part numbers and corresponding customer part numbers and part descriptions with one or more hyperlinks to more detailed pricing information for a part including, for example, part package multiple data, a minimum order quantity for the part, a standard part lead time, a basic part description, and a price for a required quantity of parts. This pricing information may include a link to a demand graph for the part, as described above. Other links on the product/pricing information web page display on-line catalogue data for one or more parts.

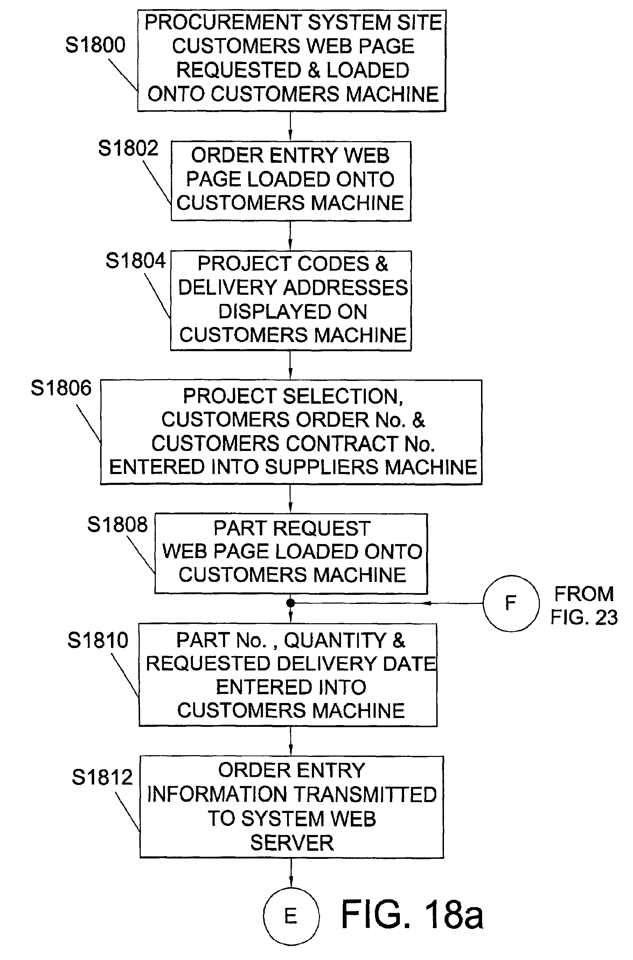

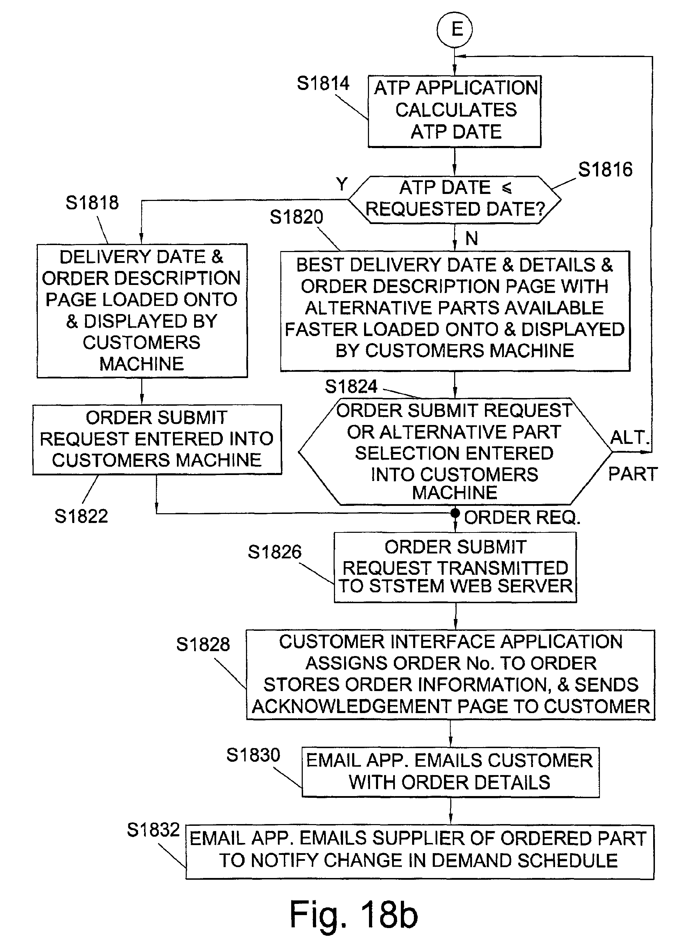

Figures 18a and 18b show an available-to-promise (ATP) customer ordering procedure. Initially, at step S1800, the customer's main menu web page is requested and loaded onto a customer terminal 200. Customer terminal 200 may be a general purpose computer such as that illustrated in Figure 3. Customer access to the system is controlled by means of a customer user name and password for digital certificate which must be provided to the central computer system before the customer's web page is accessible (the access control steps are not shown in Figure 18).

The customer then selects the order entry menu option and, at step S1802, an order entry web page is loaded onto the customer's terminal. This web page includes one or more customer project codes on which parts may be ordered, and one or more delivery addresses associated with each project code, which are displayed on the customer's terminal at step S1804. At step S1806, the customer selects a project and associated address to order parts against, and enters a customer order number and a contract number into the web page, which is then submitted to web server 212 for processing by the central system.

A part request web page is then transmitted onto customer terminal 200, at step S1808, where it is loaded and displayed by a web browser. The parts request web page has fields to allow a user to enter a desired part number and quantity, and a date by which that quantity of the parts is required. This information is entered by the customer at step S1810, and this order entry information is then transmitted to web server 212 at step S1812. The order entry web page may also offer other functions, such as a search for parts when an exact part number is not known.

The ATP procedure continues at step S1814 of Figure 18b. Referring briefly to Figure 2, web server 212 passes the order entry information to interface application 216 and thence to mainframe 218. This has access to ATP application programme code in storage 226, and also communicates with database 220 via a telnet connection to mainframe 218, to calculate an ATP date.

At step S1814 the ATP application software calculates an available-to-promise for the specified quantity of parts. This is a date by when the distributor can guarantee to provide the specified quantity of parts to the customer. To determine an ATP date, the system first looks at the distributor's on-hand stock and attempts to fulfil the order using this stock alone. If the order can be fulfilled in this way, the ATP date is simply the current date (i.e. of the order request information) offset by the transit time from the distributor to the customer. This transit time will depend upon the customer's location and could be, for example, one day for delivery within the distributor's country, three days for delivery to a different, but nearby country and five days for global delivery. Database 220 may store a table of transit times from the distributor to each customer/project address.

If the distributor's on-hand stock is insufficient to meet the customer's request, the ATP system looks next at the supplier's in-transit stock, then at the supplier's available on-hand stock, and afterwards at the part's supplier's work-in-progress. If the distributor has any available stock of the part, the order may be split to provide those parts available directly from the distributor first, a second batch of parts from the supplier's in-transit stock and the remainder from the supplier's work-in-progress. If there is still insufficient stock to meet the requested quantity of parts, the deficit may be offered by an ATP fence date, which is a date calculated based upon a known replenishment of stock time for that part and stored in database 220. Thus, it is always possible to provide parts by the ATP fence date.

When calculating an ATP date for an order which is being satisfied by in-transit stock, stock held at a supplier's warehouse, or supplier's work-in-progress stock, the system takes account of, respectively, when the goods in-transit are expected to arrive at the distributor; the transit time from the supplier to the distributor; and the expected work-in-progress completion date delayed by the supplier-to-distributor transit time. Preferably the system will also adjust the promised date to take account of any non-working days such as weekends, which may impact upon the ATP calculation. In some applications, for example, the replenishment or stores time may be affected where the distributor's warehouse staff do not work on Saturday and/or Sunday.

The normal customer requirement is for parts to be delivered as soon as possible, but in some cases, for example to keep customer stock low during just-in-time manufacturing processes, stock must be delivered on a precise date and/or time; when determining an ATP date for an order required as soon as possible, the delivery date may notionally be assumed to be the current date (on which the calculation is being made).

Where the ATP system is used by a manufacturer to calculate promised delivery dates to its customers, the same general principles apply. In such a system a supplier supplies one or more parts of items which are manufactured by the manufacturer for delivery to its customers. The database stores stock levels for the parts held by the supplier, as well as work in progress information relating to the parts. The available-to-promise calculation is based upon the level of stock of parts held by both the manufacturer and the supplier and, preferably, also upon the supplier's work in progress for the relevant parts. The ATP calculation also takes into account the time to manufacture an item using a supplied part.

When a customer request is received for a specified quantity of items, the ATP date will depend upon the availability of the components for the requested items, and will also depend upon the manufacturing time. Where a single component part is processed by the manufacturer to create the requested item, the ATP calculation is employed, as described above, to determine the date or dates at which the needed quantity of the component will be available for processing by the manufacturer, and this date is then offset by the manufacturing time to calculate an available-to-promise date.

More typically, several parts are required to manufacture an item needed to fulfil a customer order and in this case a date or dates at which the quantities of each part will be available at the manufacturer are determined and these dates are then input into a project plan to determine the date or dates at which the manufacture of the requested items will be complete (there will be more than one date where not all the desired number of components can be manufactured by the same date). In general, the date at which the manufactured item will be available-to-promise will depend upon which part's supply lies on the manufacturing project plan critical path, and the available-to-promise date will depend upon the date at which the required number of this part is available for the manufacturer.

The ATP calculation ensures that the promised delivery of an agreed quantity of a specified part to a customer on an agreed date can, barring exceptions, always be met. The ATP information specifying part number, quantity and data is available to the supplier or suppliers of the part who must ensure that the distributor meets the promised date; however the supplier or suppliers trust the distributor's ATP system for reassurance that only orders which can be fulfilled are promised to customers.

Some examples will now be described, illustrating how the ATP application calculates an ATP date. In a first example, a customer requests 1,000 units to be delivered as soon as possible. The distributor has, say, 1763 units on hand and thus the order can be satisfied "immediately". In practice, one day is allowed for entering the order onto the system and two days are allowed for stores operations at the distributor, such as printing out a pick list of units and packaging these for dispatch. If the customer is located in, say Holland, and the distributor in the UK, three days are allowed for delivery of the parts to the customer. Thus, the date promised to the customer for delivery of the parts is in six days time.

In a second example, a customer requests the delivery of 2,000 units as soon as possible. The distributor's stock, the supplier's stock and work-in-progress stock are all at zero, and there is a replenishment time often working days for the parts. Allowing one day for order entry and two days stores time, together with, say, three days in transit time to the customer, the ATP date is sixteen days from the customer request date.

In a final example, a customer requests 300 units to be delivered as soon as possible. The distributor's stock is 100 units, which are "immediately" available for dispatch to the customer (after order entry and stores processing). A further 32 units are in-transit from the supplier to the distributor, due to arrive in two days time. These units can be sent on to the customer on arrival, allowing, say, one day for stores processing at the distributor. A further 100 units are shown as work-in-progress at the supplier, due for completion by the end of the month. 68 of these units are thus available to fulfil the balance of the order and may be promised to the customer at the month end date, plus one day stores processing time, plus the distributor-to-customer transit time. When scheduling subsequent orders, the available-to-promise (ATP) calculation disregards parts which have been allocated to earlier orders and in this latter case, therefore, only 32 units from the work-in-progress would be available to promise against subsequent customer orders.

Referring now to Figure 18b, at step S1816 the calculated ATP date is compared with the customer requested date. If the requested goods or parts are available-to-promise before the requested date, the procedure continues to step S1818, in which an order description web page is loaded onto and displayed by customer terminal 200. This order description page displays order details including the part number, requested quantity and promised delivery date. When the ATP date is on or before the customer requested date, the delivery date is set at the date on which the customer has requested that the parts be delivered. The customer may then proceed to submit the order at step S1822.

If the parts cannot be promised before the date requested by the customer, the procedure continues to step S1820, in which a web page is transmitted to and displayed by customer terminal 200 to indicate the best (that is normally the earliest) delivery date the distributor can promise, together with further order information. If the complete customer order cannot be delivered by the requested date, again the procedure continues with step S1820 and the order description web page displayed indicates what parts of the order can be promised for delivery by what corresponding ATP dates.

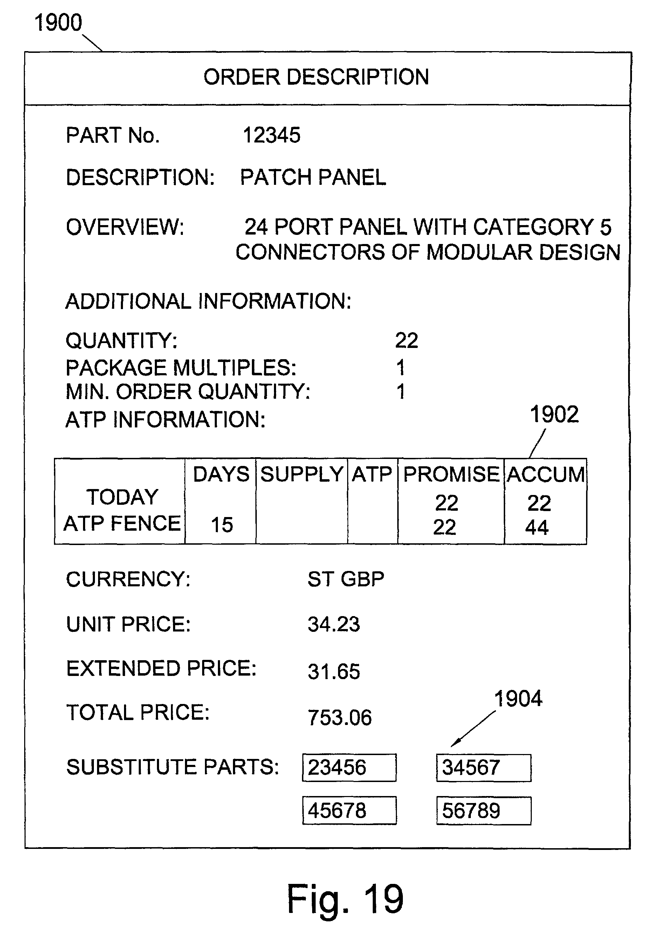

Figure 19 shows an example of an order description web page 1900, suitable for presentation in step S1820. This page provides a selection of information from table 704 described with reference to Figure 7b. The order description page 1900 displays part number and requested quantity information, as well as ATP information in table 1902. In the example 22 lots have been promised for delivery "today" and a further 22 units have been promised after 15 days, the ATP fence. A total price for the order is also given, together with, in region 1904, suggestions for substitute parts, which may be available faster or which may have a different price or specification.

Referring again to Figure 18b, from the order description web page, the customer may choose, at step S1824, to select an alternative or substitute part, in which case the procedure returns to step S1814 to recalculate a new ATP date for the new part. Alternatively, the customer may choose to submit the order with the available-to-promise date provided by the system as a promised delivery date for the selected part or parts.

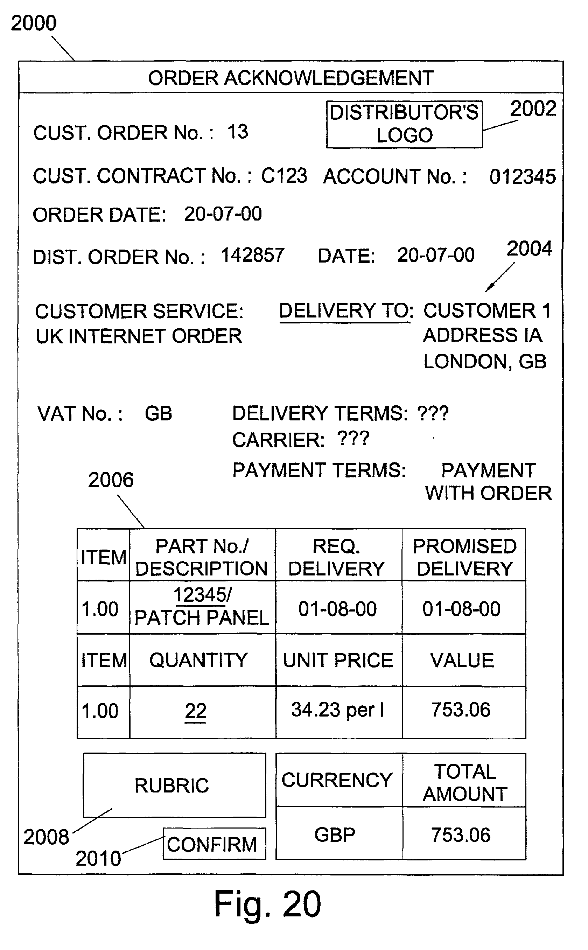

Once the customer has decided to submit an order, either with their initially requested date, or with the ATP date, the procedure passes to step S1826 where the order submit request is transmitted to web server 212 and then to mainframe 218. Then, at step S1828, a customer interface application in storage 228 assigns an order number to the order and stores the order in database 220. Alternatively, the system may e-mail the customer, using e-mail server 214, with a request to submit a return e-mail or paper copy of the order, for greater confidence. The interface application preferably also sends an order acknowledgement web page, as illustrated in Figure 20, to the customer's machine via web server 212.

Optionally, an order confirmation step may be included in the procedure, after display of the order acknowledgement web page, data stored in database 220 relating to the order remaining uncommitted until final confirmation by the customer. Once the order information has been stored in database 220 an e-mail application in storage 224 e-mails the customer with confirmation of the order details, at step S1830, and then, at step S1832, e-mails the relevant supplier or suppliers of the part with a notification that demand for the part has changed. Preferably, the e-mail also includes a hyperlink to a demand schedule page such as is illustrated in Figure 13.

Referring to Figure 20, an order acknowledgement web page 2000 for the system includes a customer order number, customer contract number, order date and customer account number. A distributor's order number and distributor's order date are also displayed. The distributor may incorporate their logo at region 2002. Delivery information including a customer name and address and delivery terms are indicated in region 2004 and table 2006 provides details of the parts ordered, the customer requested and ATP promised delivery dates, order quantity and total order value. A rubric at region 2008 provides further information such as a customer registration number and a reference to terms and conditions for the order. Corresponding information can also be delivered to the customer by e-mail for confirmation of placement of an order.

Preferably the "delivery to" area 2004 and part number and quantity for each item in table 2006 comprise hyperlinks to web pages which allow modification of the order details. Thus, clicking on the "delivery to" link allows a customer to change the delivery address for an item specified in the order. In a preferred embodiment a quantity of parts specified as a single item may be split by a customer into two separate items for delivery to different addresses, separate portions of the total quantity going to each address. Clicking on the ordered quantity allows a customer to specify a delivery schedule for the ordered quantity of parts, such as splitting the delivery into a plurality of separate deliveries to be made at specified time intervals. Preferably, however, the customer is not permitted to request delivery of parts before the guaranteed ATP date, to avoid the need to recalculate an ATP date at this stage. Clicking on the part number provides a customer with more detailed information about the selected part, for example, by linking to the product catalogue to provide a drawing and/or photograph of the part. Once the order details are to the customer's satisfaction, the customer may then confirm the order using confirm button 2010. After confirmation of the order a customer is no longer permitted to alter details of the order but instead must request alteration by the distributor's customer services department, for example, by e-mail.

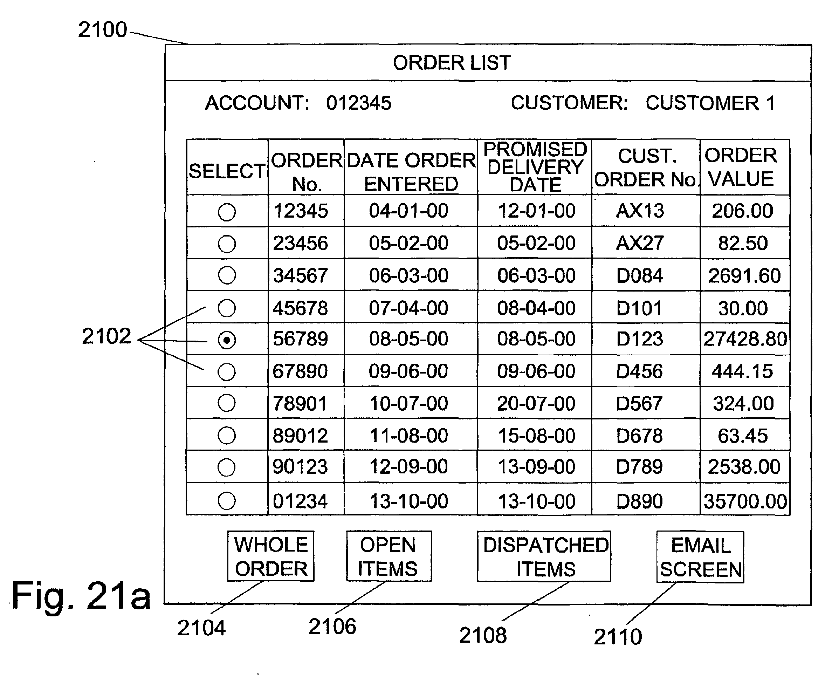

The customer also has access to detailed order information from customer main menu web page 1700, via order detail web pages 1702. Initially on selecting the order detail menu link 1702, a customer is presented with an order list web page 2100, as illustrated in Figure 21a. This web page presents a list of order numbers (excluding fully shipped orders), corresponding dates on which the order was entered into the system, promised delivery dates for the ordered parts, customer order numbers and order values. Radio buttons 2102 allow the selection of an individual order for more detailed viewing, or, alternatively, further details may be requested for all orders placed in the preceding twelve months by leaving all the radio buttons unselected. Order details are then obtained by clicking on one of a whole order button 2104 providing details of the whole order or an individually selected order, an open items button 2106 providing details of orders which have not yet been despatched, and a despatched items button 2108 providing details of orders for which some items have been despatched.

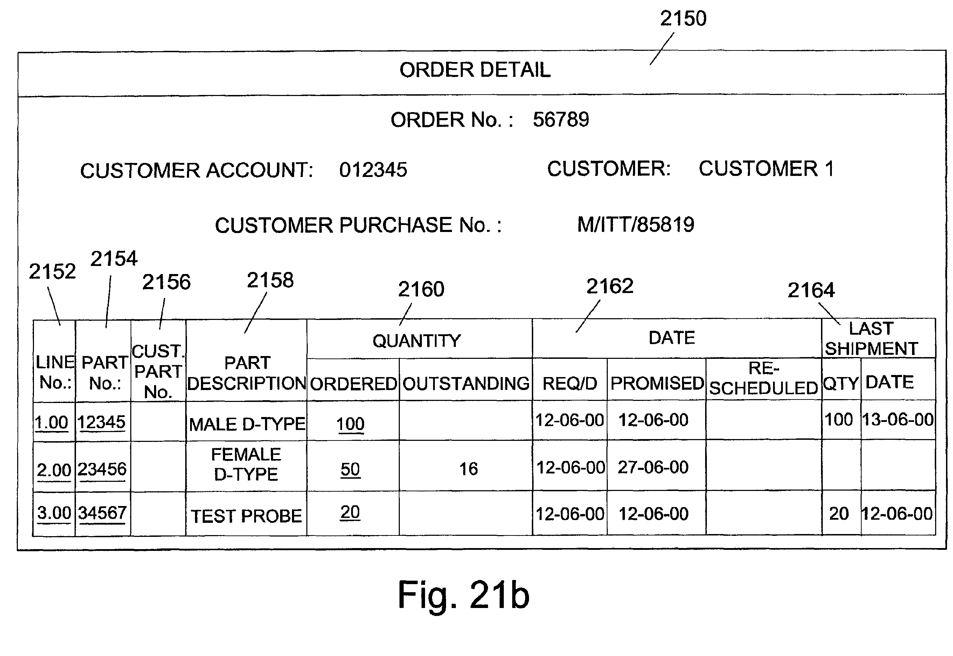

Once all the details have been requested, an order detail web page is received from web server 212 and displayed to the customer. Figure 21b shows an example of such an order detail web page 2150.

As illustrated, the web page includes basic order information such as an order number, customer account number, customer name, and customer purchase order number, as well as a table of information having a series of lines each identified by a line number 2152, each line providing details relating to an ordered part. Each line thus has a part number field 2154, a customer part number field 2156 (where a separate customer part number is stored in database 220), and a part description field 2158. Each line also has ordered and outstanding (i.e. remaining to be despatched) quantity fields 2160 and required, promised, and rescheduled date fields 2162 specifying required and promised dates for delivering the part specified in the order line; the rescheduled date field contains rescheduled delivery date information manually entered by the distributor's customer service department. Finally, each line has a last shipment field specifying a shipped quantity and shipped date for the relevant part.

The line number, part number, and ordered quantity fields 2152, 2154 and 2160 provide links to further, more detailed information relating to the order. Thus clicking on a line number 2152 provides details including, in a preferred embodiment, a shipping address and a shipping carrier and invoice number, and optionally, a link to the carrier's web site to allow the physical progress of the shipment to be tracked. Clicking on a part number 2154 provides information about a supplier's stock level for the selected part including, preferably, numbers of units of the part in stock at the supplier, in transit from the supplier to the distributor, in stock at the distributor, and under construction as work-in-progress at the supplier; a link to a demand graph for the part may also be provided. The work-in-progress information may be further expanded to provide details on the specific lots of part under manufacture and their corresponding due to stock date. This information is available to a customer because the e-procurement system has access to stock level data from a supplier of the part, including work-in-progress data, effectively in real time.

The order detail web page 2150 also allows a customer to request a change to the order, by clicking on an ordered quantity in field 2160. Each applicable field opens a web page with further customer information or options in a new window overlying the order detail web page. Clicking on ordered quantity field 2160 opens a order change request web page including the distributor's order number and other order details as illustrated in Figure 21b, together with a text message box in which a customer can enter a change request which is sent to the distributor's customer services department on pressing a "send" button. If a customer were permitted to directly modify an order which had been committed to database 220 there would be a risk that the customer's modification would have a detrimental effect on the timeliness with which the orders of other customers could be met. For this reason once an order is committed to database 220 it can only be changed manually by the distributor's customer services department who can manually determine the impact any change will have on the delivery of other orders. The demand graph described above provides a useful tool for the customer services department when considering the impact an amendment to an order will have. If the customer services department reschedules all or part of the order, a rescheduled date will appear in field 2162 of Figure 21b and an e-mail detailing the changes to the order will automatically be sent to the customer, generated by customer services application code (not shown in Figure 2) and processed as a batch job by e-mail server 214 in the usual way.

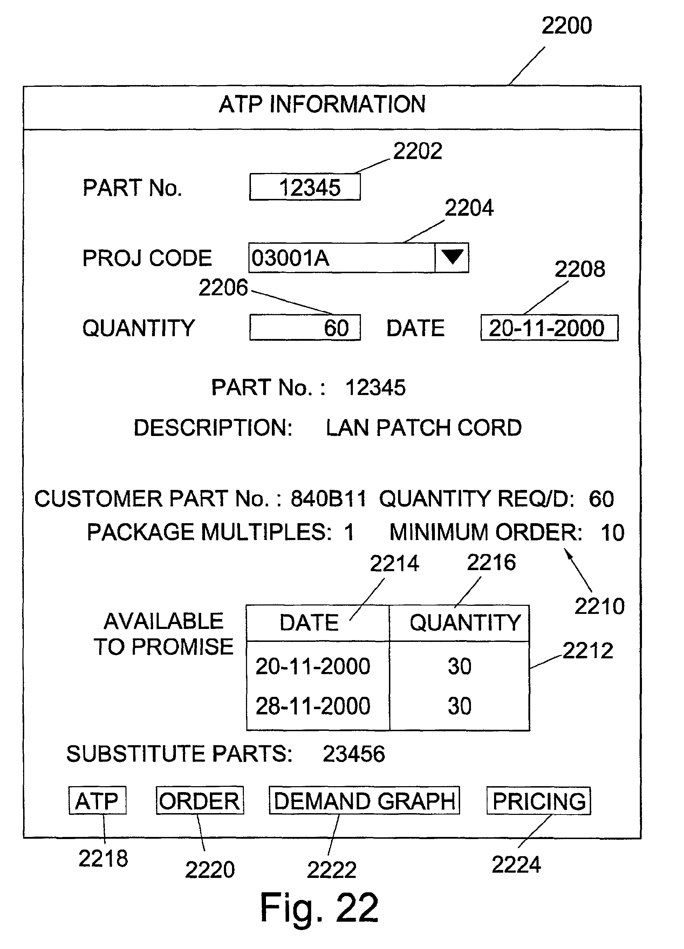

Referring now to Figure 22, this shows an example of an ATP information web page 2200 accessible from the customer's main menu web page. Broadly speaking, the purpose of ATP information page 2200 is to allow a customer access to ATP information without having to place an order. However, once ATP information or a part has been obtained, the customer may then go on to place an order using order button 2220, as set out in more detail below. Alternatively a customer may view demand graph information using button 2222 or pricing information for a part by clicking on pricing button 2224; ATP button 2218 reloads the ATP information web page 2200.

The ATP information page has a part number field 2202 for entering a part number, and a project code field 2204, for entering a project code for use when pricing a part. To reduce the risk of erroneously ordering a part, a customer may wish to define a project and associate with that project a set of parts available from the distributor, each part being identified by its corresponding part number. A customer may have more than one project against which orders may be placed and the price of a part when ordered against different project codes may differ. Database 220 stores project code data, as described above and illustrated with reference to Figure 7a. In order to obtain ATP information the customer also enters a required quantity of parts in field 2206 and a desired delivery date for the part in field 2208.

The available to promise data displayed by ATP information page 2200 includes basic part-related information 2210 including a part number, part description, customer part number (where available), minimum order quantity, and package multiple specifying the number of parts in a package comprising a unit of stock. The displayed ATP data also includes a table 2212 comprising a date column 2214 and a quantity column 2216 specifying when, and in what quantity, parts are available to meet the potential order. This data is similar to the ATP data in table 1902 of Figure 19.

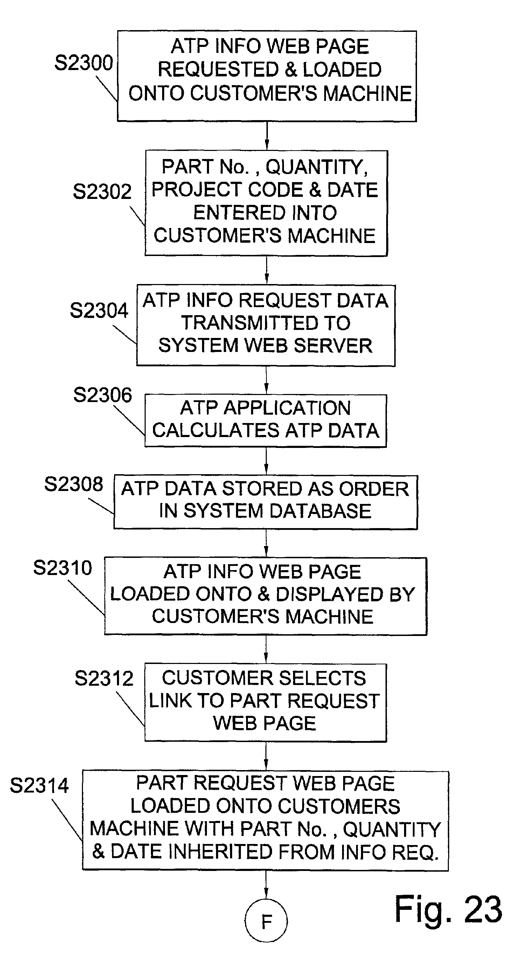

Referring now to Figure 23, this shows a flow chart for displaying the ATP web page 2200 for Figure 22 and for linking to a part request web page when order button 2220 is pressed.

At step S2300 the ATP information web page is requested and loaded onto a customer machine such as customer terminal 200. The customer then enters the part number, project code, quantity and desired date data into fields 2204 to 2208 described above, at step S2302, and this information is then transmitted (for example, on pressing "enter") to web server 212 at step S2304. At step S2306 the above described ATP application calculates ATP data for table 2212 and, at step S2308, this data is temporarily stored as an order in database 220. The customer-entered data is stored in the database because the customer may wish to place an order based upon the ATP data provided by the system, in which case, it is desirable to avoid the risk of the ATP data becoming invalid before the customer confirms their order, for example, because another customer has requested the same part in the intervening period.

To ensure that an order placed by the customer can be satisfied in accordance with the ATP data displayed on ATP information page 2200, the customer-entered data used for the ATP calculation is temporarily stored in the same way as a firm order for long enough to allow the customer to decide whether or not to place an order and to complete the ordering procedure. However, since the request for ATP information may not result in a firm order the temporary storage time should be short enough to avoid unduly disadvantaging those customers who do in fact wish to place confirmed orders for the part. A temporary storage period of approximately 30 minutes provides a suitable compromise.

Deletion of temporarily stored ATP information request data is carried out by a housekeeping application, residing in monitoring applications storage 236 and running on mainframe 218, although in other embodiments data deletion may be performed by the ATP processing code. Temporarily stored ATP information request data is, effectively, uncommitted order data relating to an uncommitted order, which is committed when the customer confirms acceptance of an offer made, for example, on an order acknowledgement web page as described above.

Referring again to Figure 23, once the ATP data has been temporarily stored in database 220, at step S2310 an ATP information web page 2200, as illustrated in Figure 22 and including a table 2212 of ATP data, is loaded onto and displayed by the customer's machine. The customer then selects a link to a part request web page, at step S2312, for example by pressing order button 2220 in the web page embodiment of Figure 22. Web server 212 then loads a part request web page onto the customer's machine, at step S2314, in an analogous manner to the loading of a part request web page at step S1808 of Figure 18a. However, when linking from ATP information web page 2200 the part request web page is preloaded with part number, requested quantity and desired delivery date data inherited from the data the customer entered at step S2302. The procedure then joins the corresponding procedure of Figure 18 at "F", allowing the customer to change the part number, quantity and delivery date if desired. The remaining steps of the ordering procedure then continue as explained above with reference to Figure 18.

As mentioned above, a customer has access to a demand graph for a part from ATP web page 2200, by clicking on demand graph button 2222 of Figure 22. Such a demand graph button is, preferably, also provided on other customer web pages described above, such as product information web pages 1704 and order entry web page 1708. For most parts supplier-originating ATP data is available to construct a demand graph as shown in Figure 13b, but for some parts no ATP data is available. In a preferred embodiment of the system a demand graph similar to that illustrated in Figure 13b is therefore constructed without using supplier-entered data where this is not available. Such a demand graph can be constructed using customer order data relating to orders for parts placed with the distributor by customers of the distributor, and distributor order data relating to purchase orders for parts placed by the distributor with suppliers of the parts. Thus, preferably, the customer order data comprises demand data for a part comprising a required quantity of the part and a due date by when that quantity is required, and, preferably, the distributor order data comprises purchase order data for a quantity of a part and a due date by when that quantity is required to be supplied by a supplier of the part.

Where ATP data is not available, a predicted stock level at a date may be calculated by adding to a current stock level held by the distributor, a total quantity of units of stock predicted to be provided to the distributor by purchase orders with suppliers at the date (excluding overdue purchase orders) and subtracting the cumulative customer demand for the stocked part at the date. This can be used for constructing a stock level curve corresponding to stock level curve 1360 of the demand graph 1300 of Figure 13b. Overdue purchase orders are disregarded, or "zeroed", in a similar way to overdue work-in-progress, as described with reference to Figure 13b. Optionally a safety level of stock at the distributor may also be included on the demand graph.

A demand graph constructed in this way still provides a useful advanced planning tool as, in a similar way to that described with reference to Figure 13b, it enables a distributor or manufacturer to see at a glance where there is a risk of not meeting a customer order. The graphical representation of the distributor's stock level allows a distributor to quickly ascertain when (or whether) the stock level is predicted to fall below the safety stock level and when (or whether) the stock level is predicted to fall below zero. If desired the demand graph can also incorporate a warning or trigger mechanism to display a warning or trigger further action when one of the two foregoing exception conditions is predicted to occur, for example, displaying a visual warning with the demand graph and/or despatching an e-mail to a supplier and/or customer (and/or distributor, for reference).

The simplified type of demand graph described above can be used by a distributor or a manufacturer. When used by a manufacturer, internal work orders take the place of purchase orders and current stock at the manufacturer takes the place of current stock at the distributor. Where a manufacturer also has the option of buying in parts to meet an order they cannot themselves satisfy, a predicted stock level may be calculated by adding both units of stock predicted to be provided by purchase orders and units of stock predicted to be provided by manufacture in response to internal work orders.

The demand graph need not necessarily operate in the context of a computer system as illustrated in Figure 2 but may be implemented as a stand-alone application on a conventional personal computer similar to that illustrated in Figure 3. A simple demand graph application, however, still requires access to data for the above described predicted stock level calculation. This may either be read directly from a database, such as data storage 316 of Figure 3, or may be accessed remotely, for example, by means of internet interface device 300 (although internet access is not essential for the demand graph).

In the above described embodiment, the internet, and more specifically, web technology, is used for communication between a central computer system, the distributor or distributors, the supplier or suppliers, and the customers. However, it is not necessary to implement the invention on the internet and the system can be arranged to operate over other forms of network. The system may, for example, be implemented on local or wide area networks and/or wireless networks such as networks employing wireless application protocol (WAP). Moreover, as is well known to those skilled in the art, the processing for performing the functions described above, may be shared between machines in ways other than that shown in the illustrated embodiment.

It will be understood that the invention is not limited to the described embodiments and encompasses modifications apparent to those skilled in the art lying within the spirit and scope of the claims appended hereto.

## Claims

1. A computer system for the ordering of items from an intermediary by a customer, the items or parts for the items being supplied to the intermediary by a supplier; the computer system comprising:
a data store for storing data, comprising an item identifier, a corresponding indication of a level of stock of the item or a part for the item held by the supplier; and an indication of at least one order for the item by said customer;
a program store storing code implementable by a processor;
a processor, coupled to the data store for accessing the stored data and to the program store for implementing code in the program store,
wherein the code comprises code for implementing a customer interface to the data store to receive a request for an item from the customer, to output offer data for making an offer to supply the requested item to the customer based upon the stock level of the item or a part for the item held by the supplier and to receive from the customer and store in the data store order data for the requested item; and for implementing a supplier interface to the data store to receive from the supplier and store in the data store an indication of a level of stock of an item or a part for the item held by the supplier, and to output customer order data for the item to the supplier.

2. A computer system as claimed in claim 1 wherein the data store includes an indication of a level of stock of the item or item and a part for the item held by the intermediary.

3. A computer system as claimed in claim 2 wherein the customer interface is configured to output data for making an offer dependent upon the level of stock of the item or item and a part for the item held by the intermediary and the level of stock of the item or a part for the item held by the supplier.

4. A computer system as claimed in any preceding claim wherein the data store is configured to store further data indicating a supplier due date or time and a corresponding level of stock of the item or a part for the item expected to be held by the supplier at the supplier due date or time.

5. A computer system as claimed in claim 4, wherein the customer interface is implemented to output the offer data dependent upon the level of stock of the item or a part for the item expected to be held by the supplier.

6. A computer system as claimed in any preceding claim wherein the data store is configured to store further data indicating an intermediary due date or time and a corresponding level of stock of the item or item and a part for the item expected to be held by the intermediary at the intermediary due date or time.

7. A computer system as claimed in claim 6, wherein the customer interface is implemented to output the offer data dependent upon the level of stock of the item or item and a part for the item expected to be held by the intermediary.

8. A computer system as claimed in any preceding claim, wherein the customer interface is implemented to output the offer data dependent upon order data relating to previous orders to supply the item.

9. A computer system as claimed in any preceding claim wherein said offer data comprises a date and/or time to indicate to the customer by when the request can be met.

10. A computer system as claimed in any one of claims 1 to 9 wherein:
the customer interface further comprises means to receive a date and/or time from the customer indicating by when the customer desires the item; and means to make a determination, based upon data in the data store, of whether the request can be met, and means to output said offer data including a result of said determination.

11. A computer system as claimed in claim 10 wherein said customer interface further comprises means to output data to offer the customer substitute items when the request cannot be met.

12. A computer system as claimed in claim 10 or 11 wherein said means to make a determination is adapted to determine when the request cannot be met and to generate, the offer data comprising data indicating a part of the request which can be met by the desired date, and a remainder part.

13. A computer system as claimed in any one of claims 10 to 12 wherein said means to make a determination comprises means to reallocate items previously allocated to meet stored orders.

14. A computer system as claimed in any one of claims 10 to 13 wherein said data store is configured to store stock location and corresponding stock levels for the items and/or parts and wherein said means to make a determination of whether a customer request can be met and/or means to make a determination of said data and/or time indicating by when a customer request can be met comprises means to determine an earliest date at which a needed number of items or parts for the items are available to the intermediary by reading from the data store a level of stock of the items or parts held by the intermediary, if this is insufficient to meet the need, reading from the data store a level of stock of the items or parts held by the supplier, and, if this is insufficient, reading from the data store a level of stock of the items or parts held by the supplier in a work-in-progress location.

15. A computer system as claimed in any preceding claim wherein the intermediary is a manufacturer of items from parts of the items supplied by the supplier, said data store stores an indication of the level of stock of a part for the item held by the supplier, and said supplier interface is implemented to receive and store in said data store an indication of the level of stock of a part for an item held by the supplier.

16. A computer system according to claim 15 wherein the customer interface is implemented to output offer data for making the offer in dependence upon a time to manufacture an item using a supplied part.

17. A computer system as claimed in any preceding claim further comprising means to send a notification to the supplier in response to order data received by the customer interface.

18. A computer system as claimed in any preceding claim wherein said order data comprises an item identifier, a number of items ordered and, optionally, an order due date or time indicating when the items are required.

19. A computer system as claimed in any preceding claim wherein said data store is configured to store selectable stock locations for an item or part and wherein said code further comprises stock transfer code for changing the level of stock at a selected location.

20. A computer system as claimed in any preceding claim wherein said code further comprises invoicing code for the supplier to invoice the intermediary for items or parts received by the intermediary.

21. A computer system as claimed in any preceding claim wherein said code further comprises code to determine, and output for the customer, supplier or intermediary, a predicted stock level of an item at a future time, by summing a level of stock of the item held by the intermediary, an initial level of stock of the item held by the supplier, and a level of additional stock of the item requested to have been made available for supply by the supplier by the future time, and subtracting a cumulative level of stock demand for the item at the future time .

22. A computer system as claimed in claim 21 wherein the customer interface is implemented to output a graphical representation of changes in said predicted stock level over time.

23. A computer system as claimed in claim 1, wherein said data store comprises a location identifier for indicating a location of an item or part.

24. A computer system as claimed in claim 23, wherein said data store further comprises at least one lot indication associated with a said item or part for providing an indication of a level of stock of one of a plurality of lots of the item or part.

25. A computer system as claimed in claim 24, wherein said data store is configured for associating a plurality of lot indications with a single said item or part.

26. A computer system as claimed in claim 22 or 23, wherein the or each said lot indication is associated with a corresponding location identifier.

27. A computer system as claimed in any one of claims 23 to 26, wherein said location identifier comprises data with a value selectable to indicate a plurality of locations.

28. A computer system as claimed in claim 27, wherein said locations include a location at said intermediary and a location at said supplier.

29. A computer system as claimed in claim 28, wherein said locations include a quarantine location at said intermediary.

30. A computer system as claimed in any one of claims 27 to 29, wherein said locations include an in-transit location.

31. A computer system as claimed in any one of claims 27 to 30, wherein said locations include a plurality of locations at said supplier.

32. A computer system as claimed in claim 31, wherein said locations at said supplier include a work-in-progress location.

33. A computer system as claimed in claim 32, wherein said data store further comprises date and/or time information associated with a location identifier identifying a said work-in-progress location, the date and/or time information indicating when items or parts at the work-in-progress location are expected to be available from the supplier.

34. A computer system as claimed in claim 33, further comprising means to generate a notification for said intermediary when a current date and/or time is later than said date and/or time information and at least some of said items or parts remain at said work-in-progress location.

35. A computer system as claimed in any one of claims 24 to 34, wherein the level of stock indication comprises an indication of the number of items or parts available to the intermediary.

36. A computer system as claimed in claim 34, wherein the said data store is configured to indicate, for a said level of stock indication, a number of items allocated to a customer.

37. A computer system as claimed in any one of claims 24 to 36, wherein said customer interface comprises means to access said data store using the item identifier and/or the location identifier.

38. A computer system as claimed in any one of claims 24 to 36, wherein said at least one order comprises a numerical indication of the number of items ordered and a corresponding due date and/or time to indicate by when the items or parts should be available or provided to the intermediary.

39. A computer system as claimed in claim 38, wherein said data store further comprises forecast data for an item indicating an expected order for a forecast number of said items.

40. A computer system as claimed in claim 38 or 39, wherein said data store is configured for associating an available number of an item with said due date and/or time.

41. A computer system as claimed in any one of claim 38 to 40, wherein said data store includes a plurality of entries each comprising a said numerical indication of items ordered and a corresponding due date and/or time.

42. A computer system as claimed in claim 41, wherein said supplier interface further comprises means to group together entries within a time period to provide the supplier with access to order data so grouped.

43. A computer system as claimed in any one of claims 38 to 42, wherein said supplier interface further comprises means to provide to the supplier an indication of the level of stock of items or parts held by the intermediary.

44. A computer system as claimed in any one of claims 38 to 43, wherein said supplier interface further comprises means to provide to the supplier, one or more items of information selected from: a safety level of stock at the supplier; an actual total level of stock at the supplier, a level of stock in transit between the supplier and intermediary; a total number of the items or parts requested from the intermediary, and a number of items or parts requested from the supplier by the intermediary.

45. A computer system as claimed in any preceding claim for use by a plurality of said suppliers.

46. A computer system as claimed in claim 45 wherein each said supplier has an associated set of item identifiers.

47. A computer system as claimed in any preceding claim for use with an internet protocol communications system linking the computer system to said customer and supplier, wherein the customer and supplier interfaces are implemented by instruction code for internet data pages.

48. A method for facilitating customer ordering of items from an intermediary, the items or parts for the items being supplied to the intermediary by a supplier, the method being for use with a data store for storing data comprising an item identifier, a corresponding indication of a level of stock of the item or a part for the item held by the supplier; and an indication of at least one order for the item by a said customer; the method comprising
receiving from the supplier, an indication of a level of stock of an item or a part for an item;
storing the received level of stock in the data store;
receiving a request for an item from the customer outputting offer data for making an offer to supply the requested item to the customer based upon the stock level of the item or a part for the item;
receiving from the customer, order data for the requested item;
storing the order data in the data store; and
outputting the order data to the supplier.

49. A method as claimed in claim 48, further comprising storing in the data store an indication of a level of stock of an item or a part for the item held by the intermediary.

50. A method as claimed in claim 49, wherein said offer data is dependent upon the level of stock of an item or a part for an item held by the intermediary and the level of stock of the item or a part for the item held by the supplier.

51. A method as claimed in any one of claims 48 to 50, further comprising receiving and storing in the data store, a supplier due date or time and a level of stock of an item or a part for an item expected to be held by the supplier at the due date or time.

52. A method as claimed in claim 51, wherein said offer data is further dependent upon the level of stock of the item or a part for the item expected to be held by the supplier.

53. A method as claimed in any one of claims 48 to 52, further comprising receiving and storing in the data store, an intermediary due date or time and a level of stock of an item or item and a part for the item expected to be held by the intermediary at the due date or time.

54. A method as claimed in claim 53, wherein said offer data is further dependent upon the level of stock of the item or item and a part for the item expected to be held by the intermediary.

55. A method as claimed in any one of claims 48 to 54, wherein said offer data is dependent upon promises to supply the item made in response to previous requests for the item.

56. A method as claimed in any one of claims 48 to 55, wherein said offer data comprises a date and/or time to indicate to the customer by when the request can be met.

57. A method as claimed in any one of claims 48 to 56, further comprising:
receiving from the customer a date and/or time indicating by when the customer desires the item;
determining, based upon data in the data store, of whether the request can be met; wherein
said offer data includes a result of said determination.

58. A method as claimed in claim 57, further comprising offering the customer substitute items when the request cannot be met.

59. A method as claimed in claim 57 or 58 wherein when the request cannot be met, the offer data comprises data indicating a part of the request which can be met by the desired date, and a remainder part.

60. A method as claimed in any one of claims 57 to 59, further comprising re-allocating items previously allocated to meet stored orders before making said determination.

61. A method as claimed in any one of claims 57 to 60, wherein said data store comprises stock locations and corresponding stock levels for the items or parts, and wherein the step of determining whether a customer request can be met and/or the step of making a determination of said data or time indicating by when the request can be met comprises determining an earliest data at which a needed number of items or parts for the items are available to the intermediary by reading from the data store a level of stock of the items or parts held by the intermediary, and if this is insufficient to meet the need, reading from the data store a level of stock of the items or parts held by the supplier, and, if this is insufficient, reading from the data store a level of stock of the items or parts held by the supplier in a work-in-progress location.

62. A method as claimed in any one of claims 48 to 61, wherein said intermediary is a manufacturer, a said supplier supplies one or more parts to the manufacturer, said data store stores an indication of the level of stock of a part for the item held by the supplier, and said offer data is dependent upon a time to manufacture a requested item using a supplied part.

63. A method as claimed in any one of claims 48 to 62, further comprising sending a notification to the supplier in response to said step of receiving order data.

64. A method as claimed in any one of claims 48 to 63, wherein said order data comprises an item identifier, a number of items ordered and, optionally, an order due date or time indicating when the items are required.

65. A method as claimed in any one of claims 48 to 64, further comprising changing the level of stock at a selected location, using stock transfer code, to reflect a physical movement of stock.

66. A method as claimed in any one of claims 48 to 65, further comprising invoicing of the intermediary by the same supplier for items received by the intermediary using invoicing code.

67. A method of managing the acquisition of items from an intermediary by a customer, the items being supplied to the intermediary by a supplier, the method comprising:
storing item-related data, the data being arranged for providing: a first table comprising an item identifier and a corresponding indication of the level of stock of the identified item held by the supplier; and a second table comprising the items identifier and the corresponding indication of at least one order for the identified item by a said customer;
accessing the first table for making an offer to supply the identified items to the customer;
receiving an order to supply the identified item to the customer in response to the offer;
updating the second table using the received order; and
providing access for the supplier to the second table.

68. A supply system terminal for notifying a supplier of items or parts of items of demand for the items or parts, the terminal comprising:
stock level input means, for the inputting of a stock level comprising an item or part identifier and a corresponding indication of a level of stock of the identified item or part held by the supplier;
stock level transmitting means for transmitting the item or part identifier and corresponding stock level indication to a remote system;
demand schedule receiving means for receiving from the remote system a demand schedule comprising an item or part identifier and a corresponding indication of at least one order for the identified item or part; and
demand schedule outputting means for outputting the received demand schedule to the supplier.

69. A supply system terminal as claimed in claim 68, wherein the demand schedule comprises information relating to an order for supply of the identified item or part from an intermediary user of the remote system.

70. A supply system terminal as claimed in claim 69, wherein the demand schedule information is stored in the remote system in response to an order for the identified item or part from a customer of the intermediary user.

71. A supply system terminal as claimed in claim 69 or 70, wherein the demand schedule further comprises an indication of a level of stock of the identified item or part held by the intermediary user.

72. A supply system terminal as claimed in any one of claims 68 to 71, wherein said at least one order comprises an indication of the number of the identified items or parts requested and a corresponding due date and/or time to indicate by when the items or parts should be available from the supplier.

73. A supply system terminal as claimed in claim 72, wherein said demand schedule further comprises forecast data for the identified item or part indicating an expected order for a forecast number of the items or parts from the supplier.

74. A supply system terminal as claimed in claim 72 or 73, wherein said demand schedule further comprises a schedule of an available number of the identified item or part with one or more corresponding dates or times.

75. A supply system terminal as claimed in any one of claims 68 to 74, comprising a plurality of orders for the identified item or part.

76. A supply system terminal as claimed in any one of claims 68 to 75, wherein said demand schedule further comprises one or more items of information selected from: a safety level of stock held by the supplier; an actual total level of stock held by the supplier; a level of stock in transit between the supplier and an intermediary user of the remote system; a total number of the identified items or parts requested from an intermediary user of the remote system; and a number of items or parts requested from the supplier by the intermediary user.

77. A supply system terminal as claimed in any one of claims 68 to 76, wherein the or each said order in the demand schedule comprises item order data comprising an ordered number of items or parts and an order due date; and wherein the order data is dependent upon said stock level indication.

78. A supply system terminal as claimed in claim 77, wherein the indication of a level of stock comprises a plurality of entries in a table, each entry comprising a number of the identified item or part and a date on which that number of parts is available or expected to be available.

79. A supply system terminal as claimed in any one of claims 68 to 78, wherein said stock level input means further comprises means to enter a stock location for the identified item or part.

80. A supply system terminal as claimed in any one of claims 68 to 79, further comprising stock transfer means for changing the level of stock at a location.

81. A supply system terminal as claimed in any one of claims 68 to 80, further comprising invoicing means for the supplier to invoice a remote user for items or parts received by the intermediary user.

82. A supply system terminal as claimed in claim 81, wherein the invoicing means comprises means to receive from the intermediary user data confirming that the parts to be invoiced arrived at the intermediary user, and further to receive an identifier from the intermediary user associated with the received items or parts; and means to transmit the invoice to the intermediary user together with the identifier received from the intermediary user associated with the received items or parts.

83. A supply system terminal as claimed in claim 68, wherein data in said demand schedule is dependent upon said inputted stock level.

84. A supply system terminal as claimed in any one of claims 68 to 83, wherein either or both of the stock level input means and the demand schedule outputting means comprise a web page suitable for display on a web browser.

85. A method of operating a supply system terminal for notifying a supplier of items or parts of items of demand for the items or parts, the method comprising:
entering a stock level using stock level input means, the stock level comprising an item or part identifier and a corresponding indication of a level of stock of the identified item or part held by the supplier;
transmitting, using stock level transmitting means, the item or part identifier and corresponding stock level indication to a remote system;
receiving, using demand schedule receiving means, from the remote system, a demand schedule comprising an item or part identifier and a corresponding indication of at least one order for the identified item or part; and
outputting, using a demand schedule outputting means, the received demand schedule to the supplier.

86. A method as claimed in claim 85, wherein the order comprises information relating to a demand for supply of the identified item or part from an intermediary user of the system.

87. A method as claimed in claim 86, wherein data in the demand schedule is dependent upon said level of stock of the identified item or part.

88. A method as claimed in claim 86 or 87, wherein the demand schedule further comprises an indication of a level of stock of the identified item part held by the intermediary user.

89. A method as claimed in any one of claims 85 to 88, further comprising entering, by the supplier, of a stock level of an identified item or part and a corresponding due date or time at which a stock of the identified item or part is expected to be held by the supplier.

90. A method as claimed in any one of claims 85 to 89, further comprising receiving from the remote system data indicating a forecast order for an identified item or part.

91. A method as claimed in any one of claims 85 to 90, further comprising entering one or more stock locations for the identified item or part.

92. A method as claimed in claim 91, further comprising changing a level of stock at a selected location to reflect movement of stock held by the supplier.

93. A method as claimed in any one of claims 86 to 92, further comprising invoicing of the intermediary user by the supplier.

94. A method as claimed in claim 93, further comprising:
receiving from the intermediary user an identifier associated with a delivery of items or parts from the supplier to the intermediary user; and
transmitting an invoice for the delivered items or parts to the intermediary user, the invoice including the identifier provided by the intermediary user to the supplier associated with said delivery.

95. An ordering terminal for a customer to order items from a manufacturer and/or distributor, the terminal comprising:
items request inputting means for inputting a request for an item and a date by which the item is desired;
request transmitting means for transmitting the request to a remote computer system;
offer receiving means for receiving from the manufacturer/distributor offer data comprising a determination of whether or not the item can be supplied by the desired date; and
outputting means for outputting the offer data to the customer.

96. An ordering terminal as claimed in claim 95, wherein the offer data includes a date by when the request can be met.

97. An ordering terminal as claimed in claim 96, further comprising means to receive substitute offer data offering the customer substitute items when the request cannot be met.

98. An ordering terminal for a customer to order items from a manufacturer or distributor, the terminal comprising:
item request inputting means for inputting a request for an item;
request transmitting means for transmitting the request to a remote computer system;
offer receiving means for receiving from the manufacturer or distributor offer data including a data by which the items can be supplied; and
outputting means for outputting the offer data to the customer.

99. An ordering terminal as claimed in any one of claims 95 to 98, further comprising transmitting means to transmit acceptance of the offer to the manufacturer or distributor.

100. An ordering terminal as claimed in claim 99, further comprising means to receive electronic confirmation of acceptance of the order from the manufacturer or distributor.

101. An ordering terminal as claimed in any one of claims 95 to 99, further comprising project selection means for selection of one of a set of projects available for ordering against at the manufacturer or distributor and, optionally, project receiving means for receiving a list of available projects from the remote computer system.

102. An ordering terminal as claimed in claim 101, further comprising items acquisition inhibiting means for inhibiting the request or order of an item associated with projects other than a selected project.

103. An ordering terminal as claimed in any one of claims 95 to 101, further comprising customer access control means to control customer access to the remote computer system.

104. A method of ordering items from a manufacturer or distributor using an ordering terminal, the method comprising:
receiving a request for an item and a date by which the item is desired, using an item request receiving means;
transmitting the request to a remote computer system using a request transmitting means;
receiving from the manufacturer or distributor using an offer receiving means, offer data comprising a determination of whether or not the item can be supplied by the desired date; and
outputting the offer data to a customer using outputting means.

105. A method of ordering items from a manufacturer or distributor using an ordering terminal, the method comprising:
receiving a request for an item, using item request receiving means;
transmitting the request to a remote computer system using a request transmitting means;
receiving from the manufacturer or distributor using an offer receiving means, offer data including a date by which the items can be supplied; and
outputting the offer data to a customer using outputting means.

106. A supply management terminal for a manufacturer or distributor of items, the terminal comprising:
item receipt code for receiving supplier, item identifier and received quantity information and for transmitting the received information to an electronic management system; and
order receiving code for receiving an order identifier for matching to a supplier's order; and
management system updating code to update management system stored records with the items received and supplier order information.

107. A procurement system terminal for informing a supplier of requests for supply of items, the terminal comprising:
supplier stock data entry means for entering data relating to a level of supplier stock of items supplied by the supplier;
supplier stock data transmission means to transmit the supplier stock data to a remote system;
request schedule reception means for receiving an item request schedule from the remote system; and
request schedule outputting means for outputting the received request schedule to the supplier;
wherein the request schedule comprises at least one request for items which have been promised for supply based upon said level of supplier stock.

108. A procurement system as claimed in claim 107, wherein said supplier stock data comprises an item identifier, a due-to-stock date and a corresponding number of identified items expected to be in stock on the due-to-stock date.

109. A procurement system as claimed in claim 108, wherein said request schedule comprises an items identifier, a number of goods requested and a date dependent upon a date on which the identified items have been promised for supply.

110. A management system terminal for informing a goods supplier of requests for goods, the terminal comprising:
goods request schedule receiving means for receiving a request schedule from a remote system user having requests for goods from customers of the remote system user; and
request schedule outputting means for outputting the received request schedule to the supplier.

111. A management system terminal as claimed in claim 110, wherein the request schedule comprises, for identified goods, a schedule of requested numbers of the goods and corresponding dates and/or times.

112. A procurement system terminal for user self-invoicing, the terminal comprising:
invoice data reception means for receiving, from a remote computer system, validated data comprising at least one order identifier identifying an order for goods validated as having been received by an order recipient;
outputting means for outputting the received invoice data to the user;
self-invoicing request means for receiving from the user a self-invoicing request; and
invoice request transmission means for transmitting the self-invoicing request to the remote system.

113. A procurement system terminal as claimed in claim 112, wherein the invoice data comprises one or more data items selected from: a purchase order number; a goods received date; a goods identifier; a goods quantity; an order value; and an order currency.

114. A procurement system terminal as claimed 112 or 113, further comprising user input means for inputting one or more of an invoice number and an invoice date for transmission to the remote system.

115. A procurement system server for a distributor or manufacturer who receives parts, or goods comprising parts, from a supplier, for sale to a customer of the distributor or manufacturer, the server comprising:
a database of the suppliers' stock; and
an order system for receiving a parts or goods request from the customer and for determining, using the database, whether or not the customer request can be met.

116. A procurement system server as claimed in claim 115, wherein the order system determines a date on which the customer request can be met.

117. A procurement system server as claimed in claim 115 or 116, further comprising communication means for transmitting a result of said determining to the customer.

118. A procurement system server as claimed in any one of claims 115 to 117,
wherein the order system further comprises means to receive and store in the database an order for parts or goods from the customer.

119. A computer system for facilitating supply of goods, or parts for goods, from a supplier to a manufacturer or distributor who takes orders for the goods or parts from a customer, the computer system comprising:
a database comprising a demand schedule, the demand schedule including a part identifier, one or more customer orders for the part and corresponding dates indicating by when the orders have been promised to be met by the distributor or manufacturer;
communication means coupled to the database; and
a supplier interface application to provide supplier access to the demand schedule.

120. A computer system as claimed in claim 119, for facilitating supply by a plurality of suppliers to the manufacturer or distributor, wherein associated with the suppliers is a set of part identifiers unique to each supplier and wherein the interface application restricts access by a supplier to parts not associated with the supplier.

121. A computer system as claimed in claim 119 or 120, wherein the database further comprises supplier inventory information indicating a supplier's stock of parts.

122. A computer system as claimed in claim 121, wherein the supplier's stock information further includes information relating to parts which are expected to be in stock held by the supplier at a future date or time.

123. A computer system as claimed in claim 121 or 122, wherein the dates in the demand schedule are determined dependent upon the supplier's stock.

124. A computer system as claimed in any one of claims 119 to 123, wherein the database further comprises manufacturer or distributor inventory information indicating a manufacturer's or distributor's stock of parts.

125. A computer system as claimed in claim 124, wherein the dates in the demand schedule are determined dependent upon the manufacturer's or distributor's stock.

126. A system for supplying goods or parts from a supplier to a manufacturer or distributor, and from the manufacturer or distributor onwards to a customer, the system comprising:
means to receive from the supplier an indication of the level of stock of an identified part held by the supplier;
means to receive from the customer a request for the identified part and a date by which the customer desires the part;
means to determine, based upon the supplier's stock, or whether the customer request can be met;
means to communicate with the customer to transmit to the customer an indication that the request can be met and to receive confirmation of an order for the identified part from the customer; and
means to transmit to the supplier an indication of the confirmed order.

127. A system for supplying goods as claimed in claim 126, further comprising means to offer a date to the customer by when the order can be met.

128. A system for supplying goods as claimed in claim 126 or 127, wherein the indication of the order transmitted to the supplier includes a part identifier, a number of parts and a date indicating by when the parts are required by the distributor or customer.

129. A system for supplying goods as claimed in any one of claims 126 to 128, further comprising means to offer the customer substitute parts when the request cannot be met.

130. A system for supplying goods as claimed in any one of claims 126 to 129, further comprising means to split a request, when the request cannot be met, into a first part which can be met by the desired date and a remainder part.

131. Computer readable instructions for controlling a computer system and/or terminal to implement the method of any one preceding method claim.

132. A carrier medium carrying the coded computer instructions of claim 131.

133. A data processing system comprising:
a stock level data store for storing stock level data for a stock item or part comprising current stock level data, stock demand data and stock replenishment data;
a program store storing code for a processor; and
a processor, coupled to the data store for accessing the stored data and coupled to the program store for implementing the stored program code;
the code comprising code for:
calculating predicted stock level data using the current stock level data, the stock replenishment data and the stock demand data, said predicted stock level data comprising a date and/or time and a predicted number of stock units available for meeting a demand for the stock item or part at said date and/or time; and
graphically displaying changes in the predicted stock level data over a future period of time.

134. A data processing system as claimed in claim 133 wherein the stock replenishment data comprises data indicating a number of units of the stock item or part and a due date and/or time at which the units are due to be available for meeting the demand for the stock item or part.

135. A data processing system as claimed in claim 134, wherein the stock replenishment data further comprises a predicted or actual date and/or time at which units of the stock item or part will be or are available for meeting the demand, and wherein said code for calculating said predicted stock level data disregards stock replenishment data elements for which the predicted or actual date and/or time is later than the due date and/or time.

136. A stock planning tool to graphically display predicted stock level changes over a period of time, the stock planning tool comprising:
computation means to calculate a predicted stock level at a future time by adding an initial stock level to a predicted cumulative additional stock level at the future time and subtracting a cumulative stock demand at the future time; and
graphing means, in communication with said computation means, for providing a graphical output of variations of said predicted stock level over time.

137. A stock planning tool as claimed in claim 136 wherein said predicted cumulative additional stock level comprises a sum of predicted stock level increases in consequence of stock purchase orders and/or stock manufacture orders.

138. A stock planning tool as claimed in claim 137 wherein said predicted cumulative additional stock level sum excludes stock level increases in consequence of stock purchase orders and/or stock manufacture orders which are overdue or predicted to be overdue.

139. A stock planning tools as claimed in any one of claims 136 to 138, wherein said graphical output includes an output of variations of stock demand over time.

140. A stock planning tools as claimed in any one of claims 136 to 139, wherein said graphical output includes an indication of a stock safety level.

141. A stock planning tools as claimed in any one of claims 136 to 140 wherein said graphical output comprises a line or bar graph.

142. An item or part supply planning method for assisting identification of a potential date and/or time at which there is a risk of a level of stock of the item or part falling below a threshold value, the method comprising:
reading initial stock level data from a data store, the initial stock level data comprising data indicating an initial stock quantity of the item or part;
reading customer demand data from a data store, the customer demand data comprising data indicating at least one order for a demanded quantity of the item or part and a corresponding date and/or time for meeting the order;
reading stock replenishment data from a data store, the stock replenishment data comprising data indicating at least one stock replenishment event increasing a stocked quantity of the item or part at a corresponding date and/or time;
calculating a cumulative item or part demand at a future data and/or time by summing demanded quantities data of the item or part preceding said future date/time;
calculating a cumulative stock level at a future data and/or time by summing said initial stock quantity and increases in stocked quantity of said item or part preceding said future date and/or time;
calculating a predicted level of stock by subtracting said cumulative item or part demand from said cumulative stock level;
repeating said predicted level of stock calculation for a plurality of different future dates and/or times; and
graphically displaying a plurality of predicted levels of stock for a corresponding plurality of different future dates and/or times.

143. A computer program to, when running, carry out the procedure of claim 142.

144. The computer program of claim 143 stored on a computer readable medium.
